# EUROPEAN PATENT APPLICATION

(11) **EP 4 640 724 A1**
(43) Date of publication of application: **29.10.2025**
(21) Application number: 24766805.6
(22) Date of filing: 15.02.2024
(51) Int. Cl.: C08F 290/06, B32B 27/30, B32B 27/40

(54) **ACTIVE ENERGY RAY CURABLE COMPOSITION, LAMINATE, AND METHOD FOR MANUFACTURING LAMINATE**

(30) Priority: 09.03.2023 JP 2023036451
(71) Applicant: DIC Corporation, Tokyo 174-8520 (JP)
(72) Inventor: OKA, Kenichirou, Ichihara-shi, Chiba 290-8585 (JP); TAKADA, Yasuhiro, Ichihara-shi, Chiba 290-8585 (JP)
(74) Representative: Kraus & Lederer PartGmbB
(86) International application number: PCT/JP2024/005139
(87) International publication number: WO 2024/185433

(57) **Abstract**

An object of the present invention is to provide an active energy ray curable composition capable of forming a cured coating film or cured layer having weather resistance and chemical resistance and being excellent in outer appearance, a laminate having the cured layer, and a method of producing the laminate. The present invention relates to an active energy ray curable composition including a compound (A) having a chain hydrocarbon group having 2 to 12 hydrocarbon groups and two (meth)acryloyloxy groups, and a compound having an isocyanurate bond or an allophanate bond.

## Description

### TECHNICAL FIELD

The present invention relates to an active energy ray curable composition, a laminate, and a method of producing the laminate.

### BACKGROUND ART

Resin materials, especially transparent resin materials, typical examples thereof including polycarbonate, are used widely in many different applications, taking advantage of features including the light weight due to low specific gravity, the easiness in processing, and the high impact resistance as compared with inorganic glasses. Furthermore, a resin primer is applied on a glass or metal plate for the prevention of coloration or rusting and the adhesion to other materials.

However, the resin materials and the resin primer have disadvantages in that the surface is easily damaged so that gloss or transparency is apt to be lost, and easily invaded by an organic solvent, and they are inferior in weather resistance (for example, light stability to ultraviolet ray etc.) and heat resistance. Therefore, the resin materials are often used in the state where they are coated with various protective films for the purpose of improving the surface properties. As such a protective film, for example, a hard coat layer formed by curing an active energy ray curable composition may be recited.

The resin materials to be used outdoors is required to have excellent weather resistance.

As an active energy ray curable composition being satisfactory in adhesion, abrasion resistance, and weather resistance, PTL 1 discloses a composition containing an inorganic oxide fine particle, poly((meth)acryloyloxyalkyl)isocyanurate having at least two (meth)acryloyl groups per one molecule thereof, a urethanepoly(meth)acrylate having at least two (meth)acryloyl groups per one molecule thereof and an alicyclic skeleton, an alkyl di(meth)acrylate having 4 to 12 carbon atoms, and a photopolymerization initiator in the specific proportions.

### CITATION LIST

### PATENT LITERATURE

PTL 1: JP2013-10921A

### SUMMARY OF INVENTION

### TECHNICAL PROBLEM

In recent years, the resin materials, the resin primers and the active energy ray curable composition to be used in severe environments such as outdoors and periphery of automobile come to be required to have not only weather resistance and abrasion resistance but also resistance to acidic rain or battery liquid of automobiles, i.e., excellent chemical resistance. However, with respect to the invention of PTL 1, any study on chemical resistance is not conducted.

Further, the composition described in PTL 1 contains an organic monomer causing a high erosion to a substrate, such as an alkyl di(meth)acrylate having 4 to 12 carbon atoms, and therefore, in the case of using a resin substrate easily subjected to erosion such as polycarbonate or various resin primers, excess erosion thereto is caused, possibly causing an outer appearance defect of the coating film or deterioration in weather resistance.

Accordingly, the invention described in PTL 1 is not one which solves both problems of chemical resistance and weather resistance and enables the formation of a coating film or a cured film each having an excellent outer appearance.

The present invention is achieved considering the above problems, and provides an active energy ray curable composition capable of forming a cured coating film or a cured layer having weather resistance and chemical resistance and having an excellent outer appearance, a laminate having the cured layer, and a method of producing the laminate.

### SOLUTION TO PROBLEM

As a result of assiduous study, the present inventors have found that the combined use of an alkane di(meth)acrylate compound, which is effective in improving adhesion and weather resistance, and a compound having an isocyanurate bond or an allophanate bond, which can restrict the alkane di(meth)acrylate compound from eroding a resin substrate and a resin primer, can solve the above problems, thereby completing the present invention.

Namely, the present invention provides the following embodiments.
(1) An active energy ray curable composition containing a compound (A) having a chain hydrocarbon group having 2 to 12 carbon atoms and two (meth)acryloyloxy groups, and a compound having an isocyanurate bond or an allophanate bond.
(2) The active energy ray curable composition according to (1), wherein the compound having an isocyanurate bond or an allophanate bond is a urethane (meth)acrylate compound (B) having an isocyanurate bond or an allophanate bond.
(3) The active energy ray curable composition according to (2), further containing a (meth)acrylate compound (C) having an isocyanurate bond.
(4) The active energy ray curable composition according to (2) or (3), wherein the urethane (meth)acrylate compound (B) having an isocyanurate bond or an allophanate bond includes a compound (B1) including -O-C(=O)-(CH₂)_{nA} (where nA represents an integer of 1 to 6) in the structure, separately from an isocyanurate bond, an allophanate bond and a (meth)acryloyl group, and a compound (B2) not including -O-C(=O)-(CH₂)_{nA} (where nA represents an integer of 1 to 6) in the structure, separately from an isocyanurate bond, an allophanate bond and a (meth)acryloyl group.
(5) The active energy ray curable composition according to any of (1) to (4), further containing a compound (D) having four or more of (meth)acryloyl groups per one molecule thereof.
(6) The active energy ray curable composition according to any of (1) to (5), which contains no solvent or a solvent in an amount of 30% by mass or less of the whole amount of the composition.
(7) A laminate including a cured layer formed from the active energy ray curable composition according to any one of (1) to (6).
(8) A method of producing a laminate, including a step 1 of applying the active energy ray curable composition according to any of (1) to (6) on a substrate to form a coating film and a step 2 of irradiating the coating film with an active energy ray to cure part or whole of the coating film.
(9) The method of producing a laminate according to (8), including, subsequently to the step 2, repeating the step 1 and the step 2 in this order at least one time.

### ADVANTAGEOUS EFFECTS OF INVENTION

According to the active energy ray curable composition of the present invention, a cured film being satisfactory in properties required for the cured film such as adhesion and abrasion resistance, having excellent chemical resistance and high weather resistance, and having excellent outer appearance can be formed. The cured film has excellent adhesion to the resin substrate such as carbonate or the resin primer, and excellent durability even in an environment of high temperature and high humidity or an environment of possibly contacting chemicals. Accordingly, the active energy ray curable composition of the present invention can be preferably used as a hard coat for a resin material in the application for automobiles or building materials, and especially, the application to an exterior coating of automobiles and the application to glazing of automobiles are preferable.

### DESCRIPTION OF EMBODIMENTS

### <Active Energy Ray Curable Composition>

The active energy ray curable composition of the present invention (hereinafter, sometimes referred to as "composition" simply) contains a compound (A) having a chain hydrocarbon group having 2 to 12 carbon atoms and two (meth)acryloyloxy groups (hereinafter, sometimes referred to as "component (A)") and a compound having an isocyanurate bond or an allophanate bond.

In the present description, a compound represented by formula (1) is referred to as "compound (1)", and with respect to those represented by the other formulae, the same is applied. "Acrylate" and "methacrylate" are inclusively referred to as "(meth)acrylate". With respect to "acrylic acid" and "methacrylic acid", "acryloyl group" and "methacryloyl group", "acryloyloxy group" (CH₂=CH-CO-O-) and "methacryloyloxy group" (CH₂=C(CH₃)-CO-O-), the same is applied, and in the description, the expression "(meth)acrylic acid" or "(meth)acryloyloxy group" is regarded as a concept including the both.

### (Component (A))

Component (A) is a compound having a chain hydrocarbon group having 2 to 12 carbon atoms and two (meth)acryloyloxy groups, and the composition contains component (A) and therefore, adhesion of the cured film to a substrate and weather resistance are improved.

The chain hydrocarbon group having 2 to 12 carbon atoms may be a straight chain or a branched chain, and is preferably a straight chain. The number of carbon atoms is preferably 4 to 10, more preferably 6 to 10. From the viewpoint of reducing the stimulation on the skin of the workers at the operation during production, the number of carbon atoms is preferably 8 to 10.

Examples of component (A) include (meth)acrylate having a straight chain hydrocarbon group such as 1,3-propanediol di(meth)acrylate, 1,4-butanediol di(meth)acrylate, 1,6-hexanediol di(meth)acrylate, 1,8-octanediol di(meth)acrylate, 1,9-nonanediol di(meth)acrylate, or 1,10-decanediol di(meth)acrylate, and a (meth)acrylate having a branched-chain hydrocarbon group such as neopentyl glycol di(meth)acrylate, 3-methyl-1,5-pentanediol di(meth)acrylate, 2-methyl-1,8-octanediol di(meth)acrylate, 2-butyl-2-ethyl-1,3-propanediol di(meth)acrylate.

As component (A), one compound may be used singly, or two or more thereof may be used in combination.

The content of component (A) is preferably from 10 to 60% by mass, more preferably from 15 to 55% by mass, further preferably from 20 to 50% by mass, based on the total amount (100% by mass) of component (A), the compound having an isocyanurate bond or an allophanate bond (specifically, one or more selected from the group consisting of a urethane (meth)acrylate compound (B) having an isocyanurate bond or an allophanate bond and a (meth)acrylate compound (C) having an isocyanurate bond), and component (D) added optionally as 100% by mass (hereinafter, referred to as "based on the total amount (100% by mass) of components (A) to (D)") . In the case where the content is not less than the lower limit, the adhesion to the substrate and the weather resistance are improved, and in case where the content is not more than the upper limit, the weather resistance are further improved.

### (Compound having an isocyanurate bond or an allophanate bond)

The composition of the present invention contains a compound having an isocyanurate bond or an allophanate bond. The isocyanurate bond and the allophanate bond are those represented by the following formulae (i) and (ii), respectively. By the combined use of the compound having an isocyanurate bond or an allophanate bond with component (A), excess erosion by component (A) to the resin substrate or the resin primer can be prevented, so that deterioration of the outer appearance of the coating film or the weather resistance of the cured film can be prevented.

As long as the compound has an isocyanurate bond or an allophanate bond, the other structure is not limited particularly, however, it is preferred that the compound has a polymeric group, and it is more preferred that the compound has a (meth)acryloyl group (a (meth)acryloyloxy group) as well as component (A).

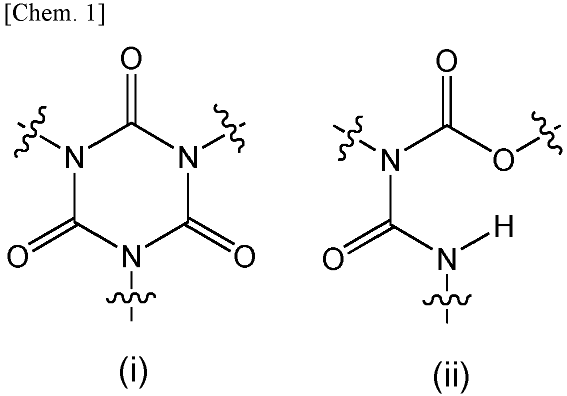

As the compound having an isocyanurate bond or an allophanate bond, one or more selected from the group consisting of a urethane (meth)acrylate compound (B) having an isocyanurate bond or an allophanate bond and a (meth)acrylate compound (C) having an isocyanurate bond is preferred. **In** the following, the respective compounds are described.

### (Component (B))

The urethane (meth)acrylate compound (B) having an isocyanurate bond or an allophanate bond (hereinafter, sometimes referred to as "component (B)") is a component which contributes to weather resistance and adhesion of the cured film.

As long as component (B) includes an isocyanurate bond or an allophanate bond, a urethane bond, and a (meth)acrylate structure (a (meth)acryloyl group), it is not limited particularly. It is preferred that the compound includes -O-C(=O)-(CH₂)_{nA} (where nA represents an integer of 1 to 6) in the structure, separately from an isocyanurate bond, an allophanate bond and a (meth)acryloyl group, and the compound represented by the following formula (2) is preferred.

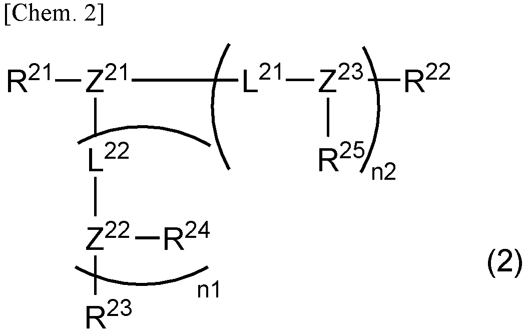

In formula (2), R²¹ to R²⁵ each independently represents a group having a polymeric group.

The polymeric group which R²¹ to R²⁵ have is preferably a (meth)acryloyl group (CH₂=CR⁴-CO- (R⁴ is the same as above)), and the combination of a (meth)acryloyl group and a divalent linking group is preferred for R²¹ to R²⁵

Examples of the divalent linking group which R²¹ to R²⁵ may have include an alkylene group having 1 to 30 carbon atoms which may have a substituent(s), an oxyalkylene group having 1 to 30 carbon atoms which may have a substituent(s), -O-, -C(=O)-O-, -O-C(=O)-, -C(=O)-, -O-C(=O)-O-, -C(=O)-NH-, -NH-C(=O)-, -O-C(=O)-NH-, -NH-C(=O)-O-, -NH-, -C(=NH)-NH- and -NH-C(=NH)- and the combination thereof. The hydrogen atom included in the divalent linking group recited above may be substituted with an alkyl group, an alkoxy group, an acyl group, or the like.

n1 to n2 each independently represents 0 or 1.

L²¹ to L²² each independently represents a divalent linking group.

The divalent linking group represented by L²¹ to L²² preferably includes the structure formed by removing hydroxy groups on both terminals of an alkylene diol, a caprolactone-modified diol, or polytetramethylene glycol. The alkylene diol is preferably an alkylene diol having 2 to 10 carbon atoms, and the repetition number of the tetramethylene group in the polytetramethylene glycol is preferably from 8 to 30.

Examples of the caprolactone-modified diol include "PLACCEL 205", which is a polycaprolactone diol having a mass average molecular weight of 530, "PLACCEL 205BA", which is a polycaprolactone diol having a carboxy group on the side chain and having a mass average molecular weight of 530, "PLACCEL L205AL", which is a polycaprolactone diol having a mass average molecular weight of 500 and being liquid at ordinary temperature, "PLACCEL 205H", which is a polycaprolactone diol having a mass average molecular weight of 530 and being improved in water resistance as compared with "PLACCEL 205", "PLACCEL 205U", which is a polycaprolactone diol having a mass average molecular weight of 530 and having a low viscosity and a low acid value as compared with "PLACCEL 205", "PLACCEL 208", which is a polycaprolactone diol having a mass average molecular weight of 830, "PLACCEL L208AL", which is a polycaprolactone diol having a mass average molecular weight of 830 and being liquid at ordinary temperature, "PLACCEL 210", which is a polycaprolactone diol having a mass average molecular weight of 1000, "PLACCEL 210BA", which is a polycaprolactone diol having a carboxy group on the side chain and having a mass average molecular weight of 1000, "PLACCEL 210CP", which is a polycaprolactone diol having a mass average molecular weight of 1000 and having a low acid value and being improved in water resistance as compared with "PLACCEL 210", "PLACCEL 210N", which is a polycaprolactone diol having a mass average molecular weight of 1000 and having a narrow molecular amount distribution as compared with "PLACCEL 210", "PLACCEL 212", which is a polycaprolactone diol having a mass average molecular weight of 1250, "PLACCEL L212AL", which is a polycaprolactone diol having a mass average molecular weight of 1250 and being liquid at ordinary temperature, "PLACCEL 220", which is a polycaprolactone diol having a mass average molecular weight of 2000, "PLACCEL 220BA", which is a polycaprolactone diol having a carboxy group on the side chain and having a mass average molecular weight of 2000, "PLACCEL 220CPB", which is a polycaprolactone diol having a mass average molecular weight of 2000 and having a low acid value and being improved in water resistance as compared with "PLACCEL 220", "PLACCEL 220N", which is a polycaprolactone diol having a mass average molecular weight of 2000 and having a narrow molecular amount distribution as compared with "PLACCEL 220", "PLACCEL 220NP1", which is a polycaprolactone diol having a mass average molecular weight of 2000 and having a low crystallizability as compared with "PLACCEL 220", "PLACCEL L220AL", which is a polycaprolactone diol having a mass average molecular weight of 2000 and being liquid at ordinary temperature, "PLACCEL 230", which is a polycaprolactone diol having a mass average molecular weight of 3000, "PLACCEL L230AL", which is a polycaprolactone diol having a mass average molecular weight of 3000 and being liquid at ordinary temperature, "PLACCEL 230CP", which is a polycaprolactone diol having a mass average molecular weight of 3000, having a low acid value and being improved in water resistance as compared with "PLACCEL 230", "PLACCEL 240", which is a polycaprolactone diol having a mass average molecular weight of 4000, "PLACCEL 240CP", which is a polycaprolactone diol having a mass average molecular weight of 4000 and having a low acid value and being improved in water resistance as compared with "PLACCEL 240", "PLACCEL 220EB", which is a polycaprolactone diol having a mass average molecular weight of 2000 and being improved in hydrolysis resistance as compared with "PLACCEL 220", and "PLACCEL 220EC", which is a polycaprolactone diol having a mass average molecular weight of 2000 and being excellent in elastic recovery as compared with "PLACCEL 220EB", (all the names are trade names of the products manufactured by Daicel Corporation).

Among them, from the viewpoint of weather resistance and abrasion resistance of the obtained cured film, a polycaprolactone diol having a mass average molecular weight falling within the range of 500 to 1500 is preferred, and a polycaprolactone diol having a mass average molecular weight falling within the range of 500 to 1000 is more preferred.

L²¹ to L²² preferably includes not only the structure formed by removing hydroxy groups on both terminals of an alkylene diol, a caprolactone-modified diol, or polytetramethylene glycol, but also the other linking group. Preferred examples of the other linking group include those recited as "the divalent linking group which R²¹ to R²⁵ may have".

Z²¹ to Z²³ each independently represents the structure represented by the following formula (2z).

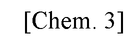

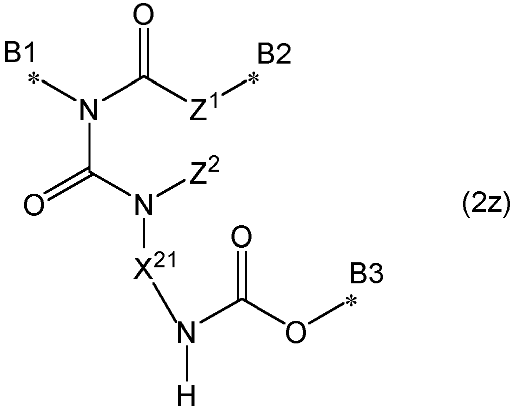

In formula (2z), X²¹ represents an alkylene group having 2 to 17 carbon atoms, preferably an alkylene group having 2 to 10 carbon atoms, more preferably an alkylene group having 2 to 6 carbon atoms.

The symbol "*" shown in formula (2z) is an atomic bonding. In the case where Z²¹ in formula (2) is the structure represented by formula (2z), the atomic bonding * indicated by B1 is directly bonded to R²¹, the atomic bonding indicated by B2 directly is bonded to L²¹ or R²², and the atomic bonding indicated by B3 is directly bonded to L²² or R²³;
in the case where Z²² in formula (2) is the structure represented by formula (2z), the atomic bonding * indicated by B1 is directly bonded to L²², the atomic bonding indicated by B2 is directly bonded to R²⁴, and the atomic bonding indicated by B3 is directly bonded to R²³ ; and
in the case where Z²³ in formula (2) is the structure represented by formula (2z), the atomic bonding * indicated by B1 is directly bonded to L²¹, the atomic bonding indicated by B2 is directly bonded to R²², and the atomic bonding indicated by B3 is directly bonded to R²⁵.

Z¹ represents an oxygen atom or a nitrogen atom, and Z² represents a hydrogen atom or -C(=O)-, proviso that in the case where Z¹ represents an oxygen atom (-O-), Z² represents a hydrogen atom (-H) and, in the case where Z¹ represents a nitrogen atom, Z² represents -C(=O)-, and the nitrogen atom in Z¹ is bonded to -C(=O)- in Z² to form a ring.

Namely, in the case where Z¹ represents an oxygen atom, the formula (2z) represents the structure having an allophanate bond, and in the case where Z¹ represents a nitrogen atom, the formula (2z) represents the structure having an isocyanurate bond. For component (B), those having an isocyanurate bond are preferred as formula (2z).

In particular, the compounds represented by the following formulae (2-1) to (2-4) are preferred as compound (2).

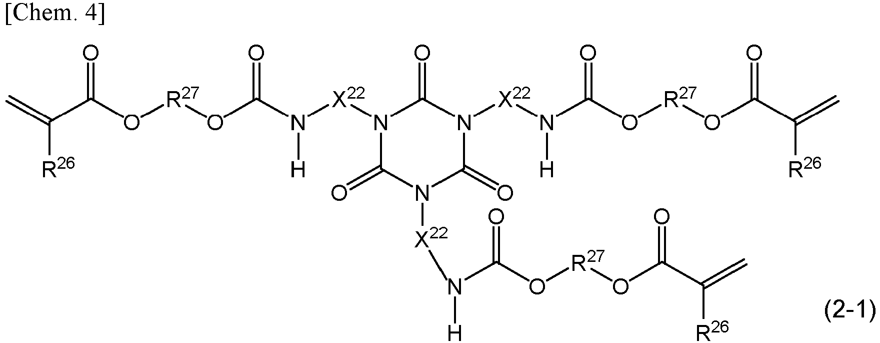

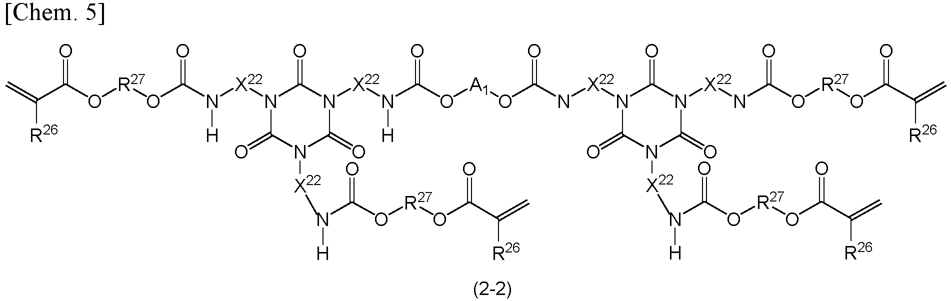

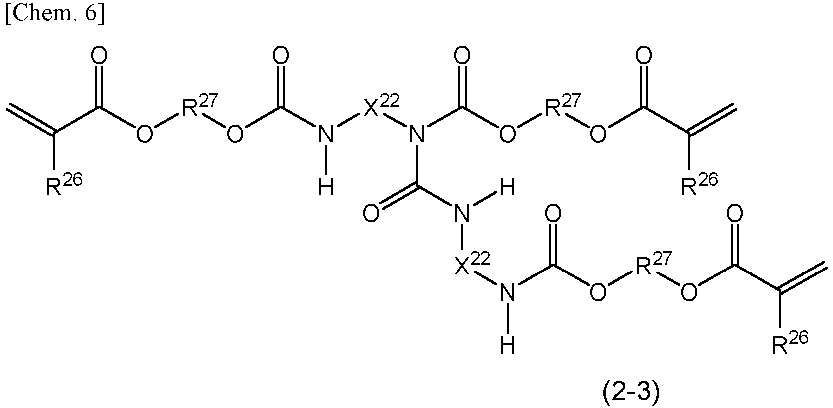

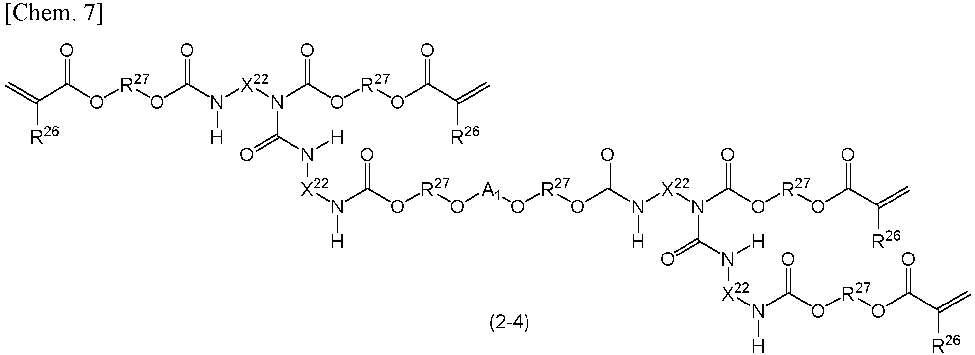

In formulae (2-1) to (2-4), R²⁶ each independently represents a hydrogen atom and a methyl group.

In formulae (2-1) to (2-4), R²⁷ each independently represents an alkylene group having 2 to 10 carbon atoms (preferably 2 to 4 carbon atoms), R^{A}-(O-CO-(CH₂)₅)ₙ - or R^{A}-(O-(CH₂)₄)ₙ -.

R^{A} represents an alkylene group, preferably an alkylene group having 2 to 4 carbon atoms.

n each independently represents an integer of 1 to 10, preferably an integer of 1 to 5.

In formulae (2-1) to (2-4), X²² each independently represents an alkylene group having 2 to 17 carbon atoms, preferably an alkylene group having 2 to 10 carbon atoms, more preferably an alkylene group having 2 to 6 carbon atoms.

In formulae (2-2) and (2-4), A₁ represents the structure formed by removing hydroxy groups on the terminals of either of an alkylene diol, a caprolactone-modified diol, or polytetramethylene glycol, and is the same as those described with respect to L²¹ to L²².

In formulae (2-1) and (2-4), plural R²⁶'s may be the same or different, plural R²⁷'s may be the same or different, and plural X²²'s may be the same or different.

As component (B), one compound may be used singly, or two or more thereof may be used in combination. Among them, for ensuring good balance between plural characteristics, it is preferred to use two or more of component (B) in combination.

In the case where two or more thereof are used, preferred is the combined use of compound (B1) including -O-C(=O)-(CH₂)_{nA} (where nA represents an integer of 1 to 6) in the structure, separately from an isocyanurate bond, an allophanate bond and a (meth)acryloyl group, and compound (B2) not including -O-C(=O)-(CH₂)_{nA} (where nA represents an integer of 1 to 6) in the structure, separately from an isocyanurate bond, an allophanate bond and a (meth)acryloyl group.

In the case where two or more thereof is used, it is preferred that component (B) includes component (B11) and component (B22). As component (B11), examples thereof include the compound represented by formula (2-1) or (2-3) where at least one of R²⁷ represents R^{A}-(O-CO-(CH₂)₅)ₙ - or R^{A}-(O-(CH₂)₄)ₙ - or the compound represented by formula (2-2) or (2-4) where hydroxy groups on the terminals of polytetramethylene glycol or polycaprolactone diol is removed from A₁. As component (B22), examples thereof include the compound represented by formula (2-1) or (2-3) where R²⁷ represents an alkylene group or the compound represented by formula (2-2) or (2-4) where hydroxy groups on the terminals of an alkylene diol is removed from A₁.

Particularly preferred are the combination of component (B11) represented by formula (2-1) and the component (B22) represented by formula (2-1), and the combination of the component (B11) represented by formula (2-2) where A1 has a polycaprolactone structure and the component (B22) represented by formula (2-1).

In the case where component (B) includes component (B1) and component (B2) or the case where component (B) includes component (B11) and component (B22), the content of component (B1) or component (B11) is preferably 9 to 90% by mass, more preferably 20 to 70% by mass, further preferably 30 to 60% by mass, particularly preferably 45 to 60% by mass based on the total solid content (100% by mass) of components (A) to (C), and the content of component (B2) or component (B22) is preferably 5 to 60% by mass, more preferably 10 to 50% by mass, further preferably 15 to 40% by mass, particularly preferably 20 to 30% by mass based on the total solid content (100% by mass) of components (A) to (C).

In the case where the composition of the present invention contains component (B), the whole content of component (B) is preferably 10 to 80% by mass, more preferably 15 to 70% by mass, further preferably 25 to 60% by mass based on the total amount (100% by mass) of components (A) to (D). In the case where the content is not less than the lower limit, the weather resistance is improved, and in case where the content is not more than the upper limit, the abrasion resistance is improved.

### <Component (C)>

The (meth)acrylate compound (C) having an isocyanurate bond (hereinafter, sometimes referred to as "component (C)") is a component which contributes to the abrasion resistance and the adhesion of the cured film.

Component (C) is a compound not corresponding to component (B), not having a urethane bond, and having an isocyanurate bond and (meth)acrylate structure ((meth)acryloyl group).
Preferred examples of component (C) include the compound represented by formula (1).

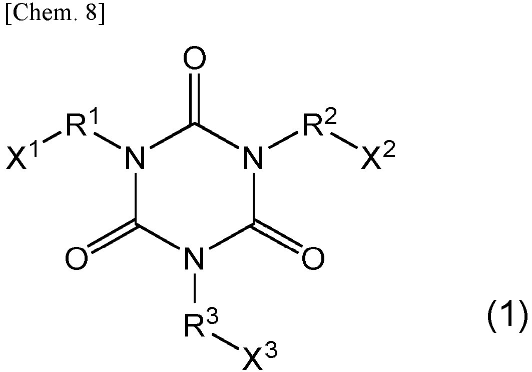

In formula (1), R¹, R² and R³ each represents an oxyalkylene group or a polyoxyalkylene group.

The number of carbon atoms in the oxyalkylene group is preferably 1 to 8, more preferably 1 to 5, particularly preferably 1 to 3.

With respect to number of carbon atoms of the polyoxyalkylene group, number of carbon atoms per one repeating unit is preferably 1 to 8, more preferably 1 to 5, particularly preferably 1 to 3. Incidentally, the repeating number of the oxyalkylene group in the polyoxyalkylene group is preferably in the range of 1 to 10.

Incidentally, the oxygen atom of the oxyalkylene group and the oxygen atom on the terminal of the polyoxyalkylene group each is bonded to X¹, X² or X³ in the formula.

X¹, X² or X³ each independently represents CH₂=CR⁴-CO-, CH₂=CR⁴-CO(O(CH₂)₅-CO)ₐ₁-, a hydrogen atom or an alkyl group, with the proviso that at least two of X¹ to X³ represent CH₂=CR⁴-CO- or CH₂=CR⁴-CO(O(CH₂)₅-CO)ₐ₁-. Namely, compound (1) is a di-functional or trifunctional (meth)acrylate.

R⁴ represents a hydrogen atom or a methyl group, plural R⁴'s may be the same or different, and R⁴ is preferably a hydrogen atom.

a1 represents an integer of 1 or more, preferably an integer of 1 to 3, more preferably 1 or 2, particularly preferably 1.

In particular, it is preferred that X¹, X² or X³ each represents CH₂=CR⁴-CO-, CH₂=CR⁴-CO(O(CH₂)₅-CO)ₐ₁-, or a hydrogen atom, it is more preferred that at least two of X¹ to X³ represent CH₂=CR⁴-CO-, and it is particularly preferred that all the three of X¹ to X³ represent CH₂=CR⁴-CO-.

Particularly preferred examples of compound (1) include the compound represented by the following formula (1-1).

In the following formula, R⁴ is the same as described above, and R^{1'} to R^{3'} each represents an alkylene group having 1 to 5 carbon atoms (preferably 1 to 3 carbon atoms).

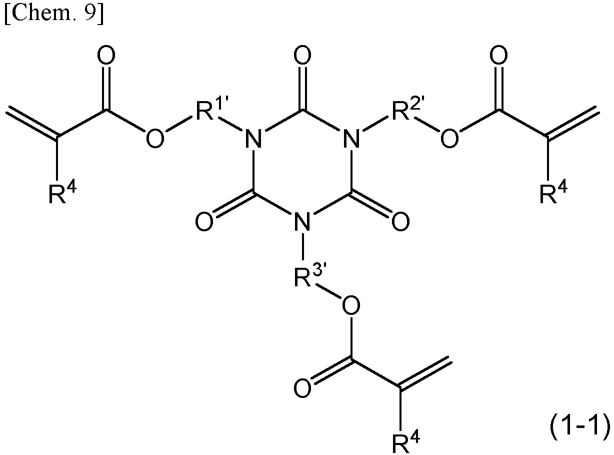

Examples of the specific structure of component (C) include bis(2-acryloyloxyethyl)hydroxyethylisocyanurate, tris(2-acryloyloxyethyl)isocyanurate (trade names: Aronix M-313 and Aronix M-315, manufactured by Toagosei Co., Ltd., trade names: NK Esters A9300 and A9300S, manufactured by Shin-Nakamura Chemical Co., Ltd., and SR368 and SR368NS, manufactured by Arkema), bis(2-acryloyloxypropyl)hydroxyethylisocyanurate, tris(2-acryloyloxypropyl)isocyanurate, tris(2-acryloyloxyethyl)isocyanurate subjected to modification with one caprolactone per one molecule (trade names: Aronix M-325, manufactured by Toagosei Co., Ltd.), and tris(2-acryloyloxyethyl)isocyanurate subjected to modification with three caprolactones per one molecule (trade names: Aronix M-327, manufactured by Toagosei Co., Ltd.).

As component (C), one compound may be used singly, or two or more thereof may be used in combination.

In the case where the composition of the present invention contains component (C), the content of component (C) is preferably from 1 to 79% by mass, more preferably from 3 to 67.5% by mass, further preferably from 5 to 50% by mass, based on the total amount (100% by mass) of components (A) to (D). In the case where the content is not less than the lower limit, the abrasion resistance and the adhesion are more improved, and in case where the content is not more than the upper limit, the weather resistance and the chemical resistance are more improved.

As the compound having an isocyanurate bond or an allophanate bond, either component (B) or component (C) may be used, and both component (B) and component (C) may be used. In particular, the combined use of component (B) and component (C) facilitates achievement of improvement in weather resistance, chemical resistance and adhesion, and reduction of outer appearance defects, and therefore, the combined use is preferred.

### ((D) Component)

Component (D) is a component which does not correspond to components (A) to (C), and is a compound having four or more of a (meth)acryloyl group per one molecule. Containing component (D), the composition provides a cured film with improved abrasion resistance and chemical resistance.

As long as component (D) is a compound having four or more of a (meth)acryloyl group per one molecule, component (D) is not limited particularly. Examples thereof include a polyfunctional (meth)acrylate such as pentaerythritol tetra(meth)acrylate, dipentaerythritol penta(meth)acrylate, dipentaerythritol hexa(meth)acrylate, tripentaerythritol hepta(meth)acrylate, tripentaerythritol octa(meth)acrylate, polypentaerythritol poly(meth)acrylate, a caprolactone-modified pentaerythritol tetra(meth)acrylate, or a caprolactone-modified dipentaerythritol hexa(meth)acrylate, and a urethane(meth)acrylate obtained by reacting an isocyanate compound with a (meth)acrylate compound.

The polyfunctional (meth)acrylate as component (D) is preferably a compound represented by the following formula (3-0).

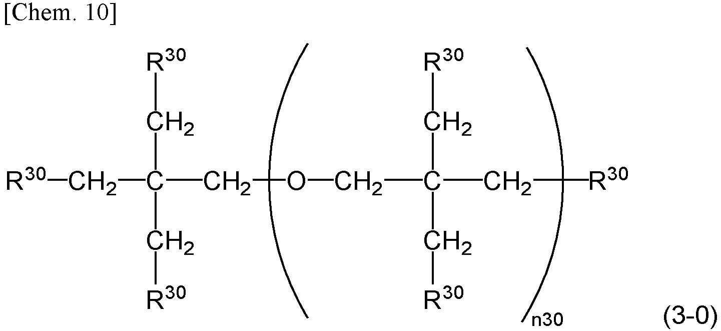

In formula (3-0), at least four of plural R³⁰'s are CH₂=CR^{B}-COO- or a caprolactone-modified (meth)acryloyloxy group CH₂=CR^{B}-CO(O(CH₂)₅C=O)_{y}-O-, and the remainder of R³⁰'s represent a hydroxy group, CH₂=CR^{B}-COO-, or CH2=CR⁸-CO(O(CH₂)₅C=O)_{y}-O-.

R^{B} represents a hydrogen atom or a methyl group. R^{B} being a hydrogen atom, an acryloyl group is formed, and R^{B} being a methyl group, a methacryloyl group is formed. y represents an integer of 1 or more.

Namely, compound (3-0) is a polymeric compound including a pentaerythritol skeleton and 4 or more of (meth)acryloyloxy groups in the structure. The inclusion of 4 or more of (meth)acryloyloxy groups causes an increased crosslinking density after cured, so that the abrasion resistance and the chemical resistance are improved.

n30 represents an integer of 0 to 4, preferably an integer of 1 to 3, more preferably 1 or 2, and it is particularly preferred that n30 represents 1, so that compound (3-0) forms a dipentaerythritol skeleton.

As compound (3-0), one compound may be used singly, or two or more thereof may be used in combination.

The urethane(meth)acrylate as component (D) can be obtained by reacting a (meth)acrylate having a hydroxy group with an isocyanate compound.

As the (meth)acrylate having a hydroxy group to be used for producing the urethane (meth)acrylate, the compound represented by the following formula (3-1) or (3-2) is preferred.

In the following formulae, R³¹ and R³² each dependently represents a hydrogen atom or a methyl group, plural R³¹ 's may be the same or different and plural R³² 's may be the same or different.

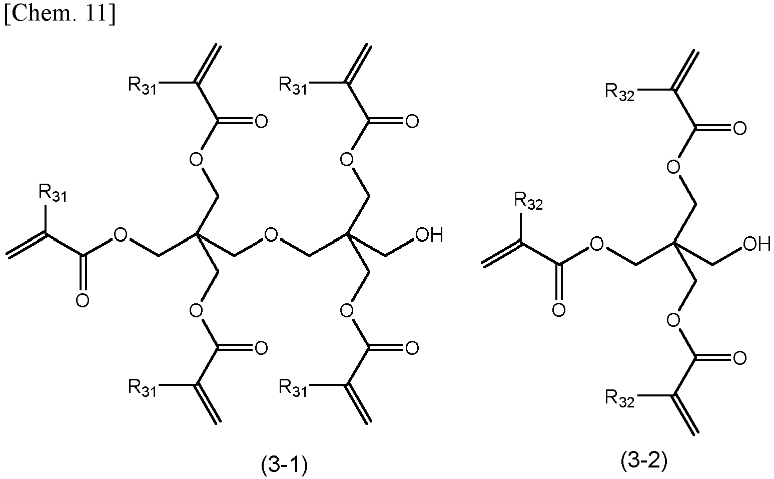

As the isocyanate compound to be used for producing the urethane (meth)acrylate, an aliphatic polyisocyanate or an alicyclic polyisocyanate each having two or more of isocyanate groups is preferred.

Examples thereof include an aliphatic polyisocyanate such as 1,4-butane diisocyanate, 1,5-pentane diisocyanate, 1,6-hexamethylene diisocyanate, 2,2,4-trimethylhexamethylene diisocyanate, 2,4,4-trimethylhexamethylene diisocyanate, lysine diisocyanate or lysine triisocyanate, a dimer thereof, and a trimer thereof; and an alicyclic polyisocyanate such as norbornane diisocyanate, isophorone diisocyanate, methylene bis(4-cyclohexylisocyanate), 1,3-bis(isocyanatomethyl)cyclohexane, hydrogenated xylylene diisocyanate, 2-methyl-1,3-diisocyanatocyclohexane or 2-methyl-1,5-diisocyanatocyclohexane, a dimer thereof, and a trimer thereof.

As the isocyanate compound, the triisocyanate compound represented by the following formula (3-3) or the diisocyanate compound represented by the following formula (3-4) is also preferred.

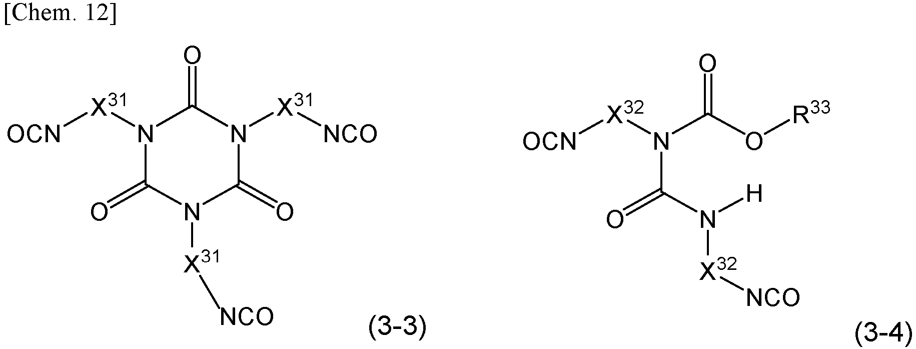

In the formulae, X³¹ and X³² each independently represents an alkylene group having 2 to 17 carbon atoms, preferably an alkylene group having 2 to 6 carbon atoms. In the formulae, plural X³¹ 's may be the same or different and plural X³²'s may be the same or different.

R³³ represents -R^{c}-O-CO-CH=CH₂ or a structure obtained by removing a hydroxy group from the compound represented by formula (3-1) or (3-2) described above, and R^{c} represents an alkylene group, with the number of carbon atoms of the alkylene group being preferably 1 to 30, more preferably 1 to 20, particularly preferably 1 to 10.

In the case where the composition of the present invention contains component (D), the total content of component (D) is preferably 1.0 to 40% by mass, more preferably 2.5 to 20% by mass, further preferably 5.0 to 10% by mass based on the total amount (100% by mass) of components (A) to (D). In the case where the content is not less than the lower limit, the chemical resistance is improved, and in case where the content is not more than the upper limit, the weather resistance is improved.

### (Other Components)

The composition of the present invention may optionally contain any other components than components (A) to (D), as long as the effects of the present invention are exhibited.

Examples of the other components include an organic solvent, a reactive compound, an organic solvent, various types of resins, a filler, a polymerization initiator, a stabilizer, an ultraviolet absorber, and a leveling agent. The composition may further contain an inorganic pigment, an organic pigment, an extender pigment, a clay mineral, a wax, a catalyst, a surfactant, a fluidity adjustor, a coupling agent, a dye, a rheology control agent, an antioxidant, a plasticizer, and the like.

The composition of the present invention may contain an organic solvent and may not contain an organic solvent. Among them, a non-solvent composition not containing a solvent, or a high solid content (high solid) composition whose content of a solvent is small relatively is preferred. The use of the non-solvent or low solvent and high solid content reduces the amount of a volatile organic compound (VOC) to thereby achieve the reduction in environmental load.

In the case on containing an organic solvent, the content is preferably 30% by mass or less, more preferably 25% by mass or less, further preferably 20% by mass or less, particularly preferably 15% by mass or less, most preferably 10% by mass or less.

Examples of the organic solvent include an ester solvent, a ketone solvent, an ether solvent, an aliphatic solvent, an aromatic solvent, and an alcoholic solvent.

Examples of the ester solvent include ethyl acetate, propyl acetate, and butyl acetate. Examples of the ketone solvent include acetone, 2-butanone, methyl ethyl ketone, and methyl isobutyl ketone. Examples of the ether solvent include tetrahydrofuran and dioxolane. Examples of the aliphatic solvent include hexane and cyclohexane. Examples of the aromatic solvent include toluene and xylene. Examples of the alcoholic solvent include ethanol, methanol, propanol, butanol, and propylene glycol monomethyl ether.

As the reactive compound, a (meth)acrylate compound which is other than components (A) to (D), or a compound having a double bond such as a vinyl group may be blended. Examples of the (meth)acryloyl compound include a monofunctional (meth)acrylate and a di- or tri- functional (meth)acrylate, which do not correspond to components (A) to (D).

Examples of the monofunctional (meth)acrylate include an alkyl (meth)acrylate having an alkyl group having 1 to 22 carbon atoms, such as methyl (meth)acrylate, ethyl (meth)acrylate, n-propyl (meth)acrylate, n-butyl (meth)acrylate, isobutyl (meth)acrylate, tert-butyl (meth)acrylate, 2-ethylhexyl (meth)acrylate, and lauryl (meth)acrylate; a cycloalkyl (meth)acrylate such as cyclohexyl (meth)acrylate and isobornyl (meth)acrylate; an ω-alkoxyalkyl (meth)acrylate such as 2-methoxyethyl (meth)acrylate and 4-methoxybutyl (meth)acrylate; hydroxyethyl (meth)acrylate, hydroxypropyl (meth)acrylate, hydroxybutyl (meth)acrylate, caprolactone-modified hydroxy(meth)acrylate (for example, trade name "PLACCEL" manufactured by Daicel Corporation), a polycarbonate-modified hydroxy(meth)acrylate, a mono(meth)acrylate of a polyester diol obtained from phthalic acid and propylene glycol, a mono(meth)acrylate of a polyester diol obtained from succinic acid and propylene glycol, polyethylene glycol mono(meth)acrylate, polypropylene glycol mono(meth)acrylate, 2-hydroxy-3-(meth)acryloyloxypropyl (meth)acrylate, and (meth)acrylic acid adducts of various types of epoxy esters.

Examples of the di- or tri- functional (meth)acrylate include di(meth)acrylate of dihydric alcohol such as tricyclodecane dimethanol di(meth)acrylate, ethylene glycol di(meth)acrylate, diethylene glycol di(meth)acrylate, triethylene glycol di(meth)acrylate, dipropylene glycol di(meth)acrylate, or tripropylene glycol di(meth)acrylate;
polyethylene glycol di(meth)acrylate, polypropylene glycol di(meth)acrylate, pentaerythritol tri(meth)acrylate, pentaerythritol tetra(meth)acrylate, dipentaerythritol penta(meth)acrylate, di(meth)acrylate of tris(2-hydroxyethyl)isocyanurate, di(meth)acrylate of a diol obtained by adding 4 mol or more of ethylene oxide or propylene oxide to 1 mol of neopentyl glycol, di(meth)acrylate of a diol obtained by adding 2 mol or more of ethylene oxide or propylene oxide to 1 mol of bisphenol A, di(meth)acrylate or tri(meth)acrylate obtained by reacting 1 mol of isocyanuric acid tris(2-hydroxyethyl) with 2 to 3 mol of acrylic acid, trimethylolpropane tri(meth)acrylate, polyethylene glycol di(meth)acrylate modified with ethylene oxide, polypropylene glycol di(meth)acrylate modified with propylene oxide, polytetramethylene glycol di(meth)acrylate modified with tetramethylene oxide, glycerol tri(meth)acrylate modified with ethylene oxide, glycerol tri(meth)acrylate modified with propylene oxide, trimethylolpropane tri(meth)acrylate, ditrimethylolpropane tetra(meth)acrylate, a hydroxypivalic acid-modified trimethylolpropane tri(meth)acrylate, trimethylolpropane tri(meth)acrylate modified with ethylene oxide, a trimethylolpropane tri(meth)acrylate modified with propylene oxide, a phosphoric acid tri(meth)acrylate modified with ethylene oxide, a polyester (meth)acrylate compound synthesized through a condensation reaction between a polyhydric alcohol, and (meth)acrylic acid and multifunctional carboxylic acid, an epoxy(meth)acrylate compound synthesized by an addition reaction of a novolac epoxy resin, a glycidyl group-containing acrylic polymer and (meth)acrylic acid, and an acrylic acrylate compound.

The reactive compound may be used singly, or two or more thereof may be used in combination. The amount of the reactive compound to be used is preferably 0 to 300% by mass based on the total solid content (100% by mass) of components (A) to (D).

As various types of resins, a thermosetting resin or a thermoplastic resin may be used.

The thermosetting resin is a resin having such a property that a change into a substantially insoluble and infusible state is caused during curing by means such as heating, radiation, or catalysis. Specifically, the thermosetting resin is a resin having such a property that a change into a substantially insoluble and infusible state is caused during curing by means such as heating, radiation, or catalysis. Examples thereof include a phenol resin, a urea resin, a melamine resin, a benzoguanamine resin, an alkyd resin, an unsaturated polyester resin, a vinyl ester resin, a diallyl terephthalate resin, an epoxy resin, a silicone resin, a urethane resin, a furan resin, a ketone resin, a xylene resin, a thermosetting polyimide resin, a benzoxazine resin, an active ester resin, an aniline resin, a cyanate ester resin, and a styrenemaleic anhydride (SMA) resin. One of the thermosetting resins may be used or two or more thereof may be used in combination.

The thermoplastic resin refers to a resin that can be melt-molded under heating. Examples thereof include a polyethylene resin, a polypropylene resin, a polystyrene resin, a rubber-modified polystyrene resin, an acrylonitrile-butadiene-styrene (ABS) resin, an acrylonitrile-styrene (AS) resin, a polymethyl methacrylate resin, an acrylic resin, a polyvinyl chloride resin, a polyvinylidene chloride resin, a polyethylene terephthalate resin, an ethylenevinyl alcohol resin, a cellulose acetate resin, an ionomer resin, a polyacrylonitrile resin, a polyamide resin, a polyacetal resin, a polybutylene terephthalate resin, a polylactic acid resin, a polyphenylene ether resin, a modified polyphenylene ether resin, a polycarbonate resin, a polysulfone resin, a polyphenylene sulfide resin, a polyetherimide resin, a polyether sulfone resin, a polyarylate resin, a thermoplastic polyimide resin, a polyamideimide resin, a polyetherether ketone resin, a polyketone resin, a liquid crystal polyester resin, a fluororesin, a syndiotactic polystyrene resin, and a cyclic polyolefin resin. One of the thermoplastic resins may be used or two or more thereof may be used in combination.

For the viscosity adjustment, a liquid organic polymer may be used. The liquid organic polymer is a liquid organic polymer that does not directly contribute to a curing reaction. Examples thereof include a carboxy group-containing polymer modified product (FLOWLEN G-900, NC-500: Kyoeisha Co., Ltd.), an acrylic polymer (FLOWLEN WK-20: Kyoeisha Co., Ltd.), an amine salt of specialized modified phosphate (HIPLAAD ED-251: Kusumoto Chemicals, Ltd.), and a modified acrylic block copolymer (DISPERBYK2000: BYK).

As the filler, for example, silica may be blended for the purpose of improving the abrasion resistance.

Silica to be used is not limited, and known silica fine particles such as powdered silica, colloidal silica, or nano silica may be used. Examples of commercially available powdered silica fine particles include AEROSIL 50 and 200 manufactured by Nippon Aerosil Co., Ltd., SILDEX H31, H32, H51, H52, H121, and H122 manufactured by Asahi Glass Co., Ltd., E220A and E220 manufactured by Nippon Silica Industrial Co., Ltd., SYLYSIA470 manufactured by Fuji Silysia Chemical, Ltd., and SG flake manufactured by Nippon Sheet Glass Co., Ltd.

Examples of commercially available colloidal silica include methanol silica sol, IPA-ST, MEK-ST, PGM-ST, NBA-ST, XBA-ST, DMAC-ST, ST-UP, ST-OUP, ST-20, ST-40, ST-C, ST-N, ST-O, ST-50, and ST-OL manufactured by Nissan Chemical Corporation.

As silica, reactive silica may be used. Examples of the reactive silica include reactive compound-modified silica. Examples of the reactive compound include a reactive silane coupling agent having a hydrophobic group, a compound having a (meth)acryloyl group, a compound having a maleimide group, and a compound having a glycidyl group.

Examples of commercially available powdered silica modified with a compound having a (meth)acryloyl group include AEROSIL RM50 and R711 manufactured by Nippon Aerosil Co., Ltd. Examples of commercially available colloidal silica modified with a compound having a (meth)acryloyl group include MIBK-SD, MIBK-SD-L, MIBK-AC-2140Z, and MEK-AC-2140Z manufactured by Nissan Chemical Corporation. Examples of the reactive silica further include silica which is modified with a glycidyl group, such as 3-glycidoxypropyltrimethoxysilane, and then subjected to an addition reaction with acrylic acid, and silica modified with a compound obtained by a urethane formation reaction between 3-isocyanate propyltriethoxysilane and a compound having a hydroxy group and a (meth)acryloyl group.

The shape of the silica fine particles is not particularly limited. Spherical, hollow, porous, rod-like, plate-like, fibrous, or irregular shape silica fine particles may be used. For example, as commercially available hollow silica fine particles, SiliNax manufactured by Nittetsu Mining Co., Ltd., or the like may be used.

The primary particle diameter thereof is preferably within the range of 5 to 200 nm. When it is 5 nm or more, inorganic fine particles are sufficiently dispersed in the composition. When it is 200 nm or less, the sufficient strength of a cured product can be ensured.

The amount of the silica to be blended is preferably 3 to 60% by mass, based on the composition (100% by mass).

Examples of a filler other than silica include an inorganic filler and an organic filler. The shape of the filler is not limited. Examples of the filler include particulate, plate-like, or fibrous fillers.

Examples of a filler having excellent heat resistance include alumina, magnesia, titania, and zirconia. Examples of a filler having excellent thermal conduction include boron nitride, aluminum nitride, alumina oxide, titanium oxide, magnesium oxide, zinc oxide, and silicon oxide. Examples of a filler having excellent electroconductive property include a metal filler and/or a metal-coated filler, which is produced by using a metal simple substance or alloy (for example, iron, copper, magnesium, aluminum, gold, silver, platinum, zinc, manganese, and stainless steel). Examples of a filler having excellent barrier properties include minerals such as mica, clay, kaolin, talc, zeolite, wollastonite and smectite, potassium titanate, magnesium sulfate, sepiolite, zonolite, aluminum borate, calcium carbonate, titanium oxide, barium sulfate, zinc oxide, and magnesium hydroxide. Examples of a filler having high refractive index include barium titanate, zirconia oxide, and titanium oxide. Examples of a photocatalytic filler include photocatalytic metals such as titanium, cerium, zinc, copper, aluminum, tin, indium, phosphorus, carbon, sulfur, thallium, nickel, iron, cobalt, silver, molybdenum, strontium, chromium, barium, and lead, composites of the metals, and oxides thereof. Examples of a filler having excellent abrasion resistance include metals such as alumina, zirconia, and magnesium oxide, composites thereof and oxides thereof. Examples of a filler having excellent electroconductive property include metals such as silver and copper, tin oxide, and indium oxide. Examples of a filler that is excellent in ultraviolet light shielding include titanium oxide and zinc oxide.

These inorganic fine particles may be appropriately selected according to the application. One kind of the inorganic fine particles may be used singly, or two or more kinds thereof may be used in combination. The inorganic particles have various properties besides the properties described as examples, and therefore, the inorganic fine particles may be appropriately selected according to the application.

Examples of the inorganic fiber include inorganic fibers such as a carbon fiber, a glass fiber, a boron fiber, an alumina fiber, and a silicon carbide fiber, a carbon fiber, an activated carbon fiber, a graphite fiber, a glass fiber, a tungsten carbide fiber, a silicon carbide fiber, a ceramic fiber, an alumina fiber, a natural fiber, a mineral fiber of mineral such as basalt, a boron fiber, a boron nitride fiber, a boron carbide fiber, and a metal fiber. Examples of the metal fiber include an aluminum fiber, a copper fiber, a brass fiber, a stainless steel fiber, and a steel fiber.

Examples of the organic fiber include synthetic fibers formed from resin materials such as polybenzazole, aramid, polyparaphenylene benzoxazole (PBO), a polyphenylene sulfide, a polyester, an acrylic resin, a polyamide, a polyolefin, a polyvinyl alcohol, and a polyarylate, natural fibers such as cellulose, pulp, cotton, wool, and silk, and regenerated fibers obtained from a protein, a polypeptide, or alginic acid.

The amount of the filler to be blended is preferably 3 to 60% by mass, based on the composition (100% by mass).

Since the composition of the present invention is cured by an active energy ray, use of a polymerization initiator, particularly a photopolymerization initiator is preferred. As the photopolymerization initiator, a known photopolymerization initiator may be used. For example, one or more selected from the group consisting of acetophenones, benzyl ketals, and benzophenones can be preferably used.

Examples of the photopolymerization initiator include an acetophenone compound such as 2,2-dimethoxy-1,2-diphenylethan-1-one, 1-hydroxycyclohexyl-phenyl-ketone, 2-hydroxy-2-methyl-1-phenyl-propan-1-one, 1-[4-(2-hydroxyethoxy)-phenyl]-2-hydroxy-2-methyl-1-propan-1-one, 2-methyl-1-[4-(methylthio)phenyl]-2-morpholinopropan-1-one, 2-benzyl-2-dimethylamino-1-(4-morpholinophenyl)-butan-1-one, diethoxy acetophenone, oligo{2-hydroxy-2-methyl-1-[4-(1-methylvinyl)phenyl]propanone}, or 2-hydroxy-1-{ 4-[4-(2-hydroxy-2-methylpropionyl)benzyl]phenyl}-2-methyl-propan-1-one; a benzophenone compound such as benzophenone, 4-phenylbenzophenone, 2,4,6-trimethylbenzophenone, or 4-benzoyl-4'-methyl-diphenyl sulfide; an α-ketoester compound such as methylbenzoyl formate, 2-(2-oxo-2-phenylacetoxyethoxy)ethyl ester of oxy-phenylacetic acid, and oxy-phenylacetic acid 2-(2-hydroxyethoxy)ethyl ester; a phosphine oxide compound such as 2,4,6-trimethylbenzoyl diphenyl phosphine oxide, bis(2,4,6-trimethylbenzoyl) phenyl phosphine oxide, or bis(2,6-dimethoxybenzoyl)-2,4,4-trimethylpentylphosphine oxide; a benzoin compound such as benzoin, benzoin methyl ether, benzoin ethyl ether, benzoin isopropyl ether, or benzoin isobutyl ether; a titanocene compound; an acetophenone/benzophenone hybrid-based photopolymerization initiator such as 1-[4-(4-benzoylphenylsulfanyl)phenyl]-2-methyl-2-(4-methylphenylsulfinyl)propan-1-one; an oxime ester-based photopolymerization initiator such as 2-(O-benzoyloxime)-1-[4-(phenylthio)]-1,2-octanedione; and camphorquinone.

One of the photopolymerization initiators may be used singly, or two or more thereof may be used in combination. The amount of the photopolymerization initiator to be used is preferably 1 to 15% by mass, and more preferably 2 to 10% by mass, based on the composition (100% by mass).

For the purpose of improving the weather resistance, an ultraviolet absorber may be blended. As the ultraviolet absorber, various compounds or substances may be used.

Examples of the ultraviolet absorber include a benzotriazine-based ultraviolet absorber such as 2-[4-[(2-hydroxy-3-dodecyloxypropyl)oxy]-2-hydroxy-phenyl]-4,6-bis(2,4-dimethylphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-[4-[(2-hydroxy-3-(2-ethyl-hexyloxy)propyl)oxy]-2-hydroxy-phenyl]-4,6-bis(2,4-dimethylphenyl)-1,3,5-triazine, 2,4-bis(2-hydroxy-4-butyloxyphenyl)-6-(2,4-bis-butyloxyphenyl)-1,3,5-triazine, or 2-(2-hydroxy-4-[1-octyloxycarbonylethoxy]phenyl)-4,6-bis(4-phenylphenyl)-1,3,5-triazine; benzotriazole-based ultraviolet absorber such as 2-(2H-benzotriazol-2-yl)-4,6-bis(1-methyl-1-phenylethyl)phenol, 2-(2-hydroxy-5-tert-butylphenyl)-2H-benzotriazole, or 2-[2-hydroxy-5-(2-(meth)acryloyloxyethyl)phenyl]-2H-benzotriazole; a benzophenone-based ultraviolet absorber such as 2,4-dihydroxybenzophenone or 2-hydroxy-4-methoxybenzophenone, a cyanoacrylate-based ultraviolet absorber such as ethyl-2-cyano-3,3-diphenyl acrylate or octyl-2-cyano-3,3-diphenyl acrylate, and inorganic fine particles that absorb ultraviolet such as titanium oxide fine particles, zinc oxide fine particles, or tin oxide fine particles. One of the ultraviolet absorbers described above may be used singly, or two or more thereof may be used in combination.

As the ultraviolet absorber, a commercially available product may be used. As the commercially available product, TINUVIN PS, TINUVIN 99-2, TINUVIN234, TINUVIN326, TINUVIN329, TINUVIN900, TINUVIN928, TINUVIN360, TINUVIN384-2, TINUVIN400, TINUVIN405, TINUVIN460, TINUVIN477, TINUVIN479 (all manufactured by BASF), ADK STAB LA-46, ADK STAB LA-F70, ADK STAB LA-29, ADK STAB LA-31G, ADK STAB LA-32, ADK STAB LA-36 (all manufactured by ADEKA Corporation), or RUVA-93 (manufactured by Otsuka Chemical Co., Ltd.), may be used.

From the viewpoint of improving the weather resistance, a benzotriazine-based ultraviolet absorber and an ultraviolet absorber having a (meth)acryloyl group are preferred. Preferably, TINUVIN400, TINUVIN405, TINUVIN479 (all manufactured by BASF), ADK STAB LA-46 (manufactured by ADEKA Corporation), and RUVA-93 (manufactured by Otsuka Chemical Co., Ltd.) are preferred.

The amount of the ultraviolet absorber to be used is preferably 0.5 to 20% by mass, and more preferably 1 to 10% by mass, based on the composition (100% by mass).

For the purpose of improving weather resistance, a hindered amine-based light stabilizer (HALS) may be blended in the composition of the present invention.

As the hindered amine-based light stabilizer, known hindered amine-based light stabilizers may be used. Examples thereof include bis(2,2,6,6-tetramethyl-4-piperidyl) sebacate, bis(1,2,2,6,6-pentamethyl-4-piperidyl) sebacate, bis(1-methoxy-2,2,6,6-tetramethyl-4-piperidyl) sebacate, bis(1-ethoxy-2,2,6,6-tetramethyl-4-piperidyl) sebacate, bis(1-propoxy-2,2,6,6-tetramethyl-4-piperidyl) sebacate, bis(1-butoxy-2,2,6,6-tetramethyl-4-piperidyl) sebacate, bis(1-pentyloxy-2,2,6,6-tetramethyl-4-piperidyl) sebacate, bis(1-hexyloxy-2,2,6,6-tetramethyl-4-piperidyl) sebacate, bis(1-heptyloxy-2,2,6,6-tetramethyl-4-piperidyl) sebacate, bis(1-octoxy-2,2,6,6-tetramethyl-4-piperidyl) sebacate, bis(1-nonyloxy-2,2,6,6-tetramethyl-4-piperidyl) sebacate, bis(1-decanyloxy-2,2,6,6-tetramethyl-4-piperidyl) sebacate, bis(1-dodecyloxy-2,2,6,6-tetramethyl-4-piperidyl) sebacate, bis(1,2,2,6,6-pentamethyl-4-piperidyl)-2-(4-methoxy-benzylidene) malonate, tetrakis(2,2,6,6-pentamethyl-4-piperidyl) 1,2,3,4-butanetetracarboxylate, tetrakis(1,2,2,6,6-pentamethyl-4-piperidyl) 1,2,3,4-butanetetracarboxylate, a condensate of 1,2,3,4-butanetetracarboxylic acid, 1,2,2,6,6-pentamethyl-4-piperidinol, and β,β,β,β-tetramethyl-3,9-(2,4,8,10-tetraoxaspiro[5,5]-undecane)diethanol, and a condensate of 1,2,3,4-butanetetracarboxylic acid, 2,2,6,6-pentamethyl-4-piperidinol, and β,β,β,β-tetramethyl-3,9-(2,4,8,10-tetraoxaspiro[5,5]-undecane)diethanol.

As the hindered amine-based light stabilizer, a commercially available product can be used. As the commercially available product, TINUVIN123, TINUVIN292, TINUVIN152, TINUVIN144, TINUVIN622SF), TINUVIN111FDL, TINUVIN249, ADK STAB LA-52 (all manufactured by BASF), ADK STAB LA-57, ADK STAB LA-63P, ADK STAB LA-68, ADK STAB LA-72, ADK STAB LA-81, ADK STAB LA-82, or ADK STAB LA-87 (all manufactured by ADEKA Corporation) may be used.

From the viewpoint of improving the weather resistance, TINUVIN123, TINUVIN152, TINUVIN144 (all manufactured by BASF), ADK STAB LA-52, ADK STAB LA-57, ADK STAB LA-63P, ADK STAB LA-68, ADK STAB LA-72, ADK STAB LA-81 (manufactured by ADEKA Corporation), ADK STAB LA-82 (manufactured by ADEKA Corporation), and ADK STAB LA-87 (manufactured by ADEKA Corporation) are preferred, and TINUVIN123 and TINUVIN152 (both manufactured by BASF), ADK STAB LA-63P, ADK STAB LA-82 (manufactured by ADEKA Corporation), and ADK STAB LA-87 (manufactured by ADEKA Corporation) are more preferred.

The amount of the hindered amine-based light stabilizer to be used is preferably 0.01 to 10% by mass, and more preferably 0.1 to 5% by mass, based on the composition (100% by mass).

For the purpose of enhancing leveling properties at being applied, enhancing the slidability of a cured film to enhance the scratch resistance, or the like, various surface modifiers may be added to the composition of the present invention. As the surface modifier, various additives that modify surface physical properties and are commercially available in the name of a surface adjustor, a leveling agent, a slidability-imparting agent, a soil-resistance-imparting agent or the like, may be used. Among the surface modifiers, a silicone-based surface modifier and a fluorine-based surface modifier are suitable.

Examples thereof include silicone-based polymers and oligomers having a silicone chain and a polyalkylene oxide chain, silicone-based polymers and oligomers having a silicone chain and a polyester chain, fluorinated polymers and oligomers having a perfluoroalkyl group and a polyalkylene oxide chain, and fluorinated polymers and oligomers having a perfluoroalkyl ether chain and a polyalkylene oxide chain. One or more thereof may be used. For the purpose of enhancing persistence of slidability or the like, a compound containing a (meth)acryloyl group in the molecule may be used. Specific examples of the surface modifier include EBECRYL350 (manufactured by DAICEL-ALLNEX LTD.), BYK-333 (manufactured by BYK Japan KK), BYK-377 (manufactured by BYK Japan KK), BYK-378 (manufactured by BYK), BYK-UV3500 (manufactured by BYK Japan KK), BYK-UV3505 (manufactured by BYK Japan KK), BYK-UV3576 (manufactured by BYK Japan KK), MEGAFACE RS-75 (manufactured by DIC Corporation), MEGAFACE RS-76-E (manufactured by DIC Corporation), MEGAFACE RS-72-K (manufactured by DIC Corporation), MEGAFACE RS-76-NS (manufactured by DIC Corporation), MEGAFACE RS-90 (manufactured by DIC Corporation), MEGAFACE RS-91 (manufactured by DIC Corporation), MEGAFACE RS-55 (manufactured by DIC Corporation), OPTOOL DAC-HP (manufactured by Daikin Industries, Ltd.), ZX-058-A (manufactured by T&K TOKA Corporation), ZX-201 (manufactured by T&K TOKA Corporation), ZX-202 (manufactured by T&K TOKA Corporation), ZX-212 (manufactured by T&K TOKA Corporation), ZX-214-A (manufactured by T&K TOKA Corporation), X-22-164AS (manufactured by Shin-Etsu Chemical Co., Ltd.), X-22-164A (manufactured by Shin-Etsu Chemical Co., Ltd.), X-22-164B (manufactured by Shin-Etsu Chemical Co., Ltd.), X-22-164C (manufactured by Shin-Etsu Chemical Co., Ltd.), X-22-164E (manufactured by Shin-Etsu Chemical Co., Ltd.), and X-22-174DX (manufactured by Shin-Etsu Chemical Co., Ltd.).

When the active energy ray curable composition of the present invention is applied to at least one surface of various materials and then irradiated with an active energy ray, the resulting cured film can be suitably used as a cured film for protecting the substrate. The cured film formed from the composition of the present invention has not only weather resistance and abrasion resistance but also high chemical resistance, and is excellent in adhesion to the materials even in a high temperature and high humidity environment, and therefore, the cured film exerts excellent effects in the case where it is used as a protective film for a material which is used in a severe high humidity environment, such as outdoors or the periphery of an automobile, for long periods of time.

Further, the active energy ray curable composition of the present invention has an appropriate erosivity to a substrate and therefore, is particularly excellent in adhesion to a substrate. Therefore, on the film formed by curing the active energy ray curable composition partially or wholly, a film having a high adhesion can be formed. Accordingly, in the case where the thickness of the film formed by applying and curing one time is not enough, by applying and curing repeatedly, a curing film having such a thickness to provide excellent durability can be formed.

### <Laminate>

The laminate of the present invention includes a cured layer formed from the active energy ray curable composition described above. The laminate has at least one layer other than the cured layer. Examples of the other layer include a substrate. The substrate and a method of producing the laminate are described below.

### <Method of Producing the Laminate>

The method of producing the laminate of the present invention includes: step 1: applying the active energy ray curable composition on a substrate, to thereby form a coating film, and step 2: irradiating the coating film with an active energy, to thereby cure the coating film partially or wholly.

### (Step 1)

In step 1, the active energy ray curable composition is applied on a substrate to thereby form a coating film.

The substrate is not limited particularly, and appropriately selected according to the application. Examples thereof include plastics, woods, metals (steel material, stainless steel material, aluminum, or the like), metal oxide, paper, and silicon or modified silicon. Further, a substrate obtained by joining different raw materials together, or one where the active energy ray curable composition of the present invention or the other composition is laminated on a substrate as a primer may be used.

In particular, the active energy ray curable composition of the present invention has excellent adhesion to plastic substrates (resin substrates) or resin primers. As described above, the resin materials have defects such that they have low abrasion resistance, and therefore, are liable to lose gloss or transparency, and have poor weather resistance. However, it is possible to reduce these defects by coating the plastic substrate or the resin primer with the composition of the present invention. Accordingly, it is preferred that the substrate of the laminate is a plastic substrate or a resin primer.

The plastic substrate is not limited particularly, as long as it is composed of a resin, and can be selected according to the purpose. Specifically, the thermosetting resins and the thermoplastic resins as described above may be used. For obtaining a transparent laminate, a polycarbonate resin (for example, an aliphatic polycarbonate, an aromatic polycarbonate, or an alicyclic polycarbonate), a polymethyl methacrylate resin, a polystyrene resin or the like is preferably used.

Further, the plastic substrate may be those composed of a single resin or those obtained by blending plural kinds of resins, and may be a single layer or those having a laminate structure of two layers or more in advance.

The plastic substrate may contain known additives such as an antistatic agent, an anti-fogging agent, an anti-blocking agent, an ultraviolet absorbing agent, an antioxidant, a pigment, an organic filler, an inorganic filler, a light stabilizer, a crystal nucleating agent, or a lubricant, and may be reinforced with a fiber (FRP).

As the resin primer, a water-soluble type or a water-dispersed type coating material, an organic solvent type or an organic solvent-dispersed type coating material, and a powder coating material, which are known, may be used. Specifically, usable are various types of coating materials such as an acrylic resin coating material, a polyester resin coating material, an alkyd resin coating material, an epoxy resin coating material, a fatty acid-modified coating material, a silicon resin coating material, a polyurethane resin coating material, a fluoroolefin coating material, or an amine-modified epoxy resin coating material. The primer may be a clear coating material not containing a pigment, and may be an enamel coating material containing the pigment or a metallic coating material containing an aluminum flake or the like, and an electrodeposition coating material, an intermediate coating material, and a top coating material, which are used for an automobile body, or a coating material to be used in a precoat metal may be used.

The shape of the substrate is not limited particularly and may be an arbitrary shape according to the purpose, examples thereof include tabular, sheet-like, or those having curvature on the whole surface or the partial surface of the three-dimensional shape.

The hardness and the thickness of the substrate are not limited particularly as well, and can be determined arbitrarily.

The method of applying the composition in not limited particularly, and an ink jet method, a spray method, a spin coat method, a dip method, a roll coat method, a blade coat method, a doctor roll method, a doctor blade method, a curtain coat method, a slit coat method, a screen print method or the like may be applied. According to the methods, the composition is applied on a substrate, thereby obtaining a coating film. **In** the case where applying is conducted again after curing the composition, the ink jet method or the spray method is preferred from the viewpoint of application approach.

### (Step 2)

**In** step 2, the coating film obtained in step 1 is irradiated with an active energy ray to thereby cure the coating film partially or wholly.

The composition of the present invention includes the compound having a polymeric unsaturated group and therefore, the composition being irradiated with an active energy ray, the composition is cured to thereby form a cured film (cured layer). The coating film may be cured wholly with one-time irradiation, or the coating film may be cured partially with irradiation, and subsequently, through plural times of the irradiation, the curing degree may be increased gradually to thereby provide a finally cured film. Between the plural irradiations, the active energy ray curable composition may be further applied thereon.

Examples of the active energy ray include ionization radiations such as ultraviolet ray, electron ray, α-ray, β-ray, and γ-ray, with ultraviolet ray (UV) being preferred in terms of the curing property and availability.

In the case where ultraviolet ray is used as the active energy ray, examples of the device of irradiating ultraviolet ray include a low pressure mercury lamp, a high pressure mercury lamp, an ultrahigh pressure mercury lamp, a metal halide lamp, an electrodeless lamp (fusion lamp), a chemical lamp, a black light lamp, a mercury-xenon lamp, short arc lamp, a helium-cadmium laser, an argon laser, solar light, and an LED lamp. By means of these, the composition applied or molded is irradiated with ultraviolet ray having a wavelength of about 180 to 400 nm, whereby a cured film or a cured product can be obtained. The amount of the ultraviolet ray to be irradiated can be selected appropriately according to the kinds and the amount of the photopolymerization initiator used.

After step 2, step 1 and step 2 may be repeated in this order at least one time or more. Step 1 (application) and step 2 (curing) being repeated, a cured film can be thickened. The method is useful, in the case where the application and curing one time does not cause sufficient thickness of the cured film depending on the combination of the application method and the thickness of the coating film to be desired.

The composition of the present invention has an appropriate erosivity to the substrate, and therefore, even in the case where a cured film is formed on a film composed of the composition cured, the adhesion is not deteriorated.

For the purpose of further enhancing the adhesion, the coating film in step 2 which is in the halfway stage may be cured incompletely to retain a partially cured state (semicured). Since the coating film is partially uncured, the adhesion to the lower layer is improved. In the case where the film is cured partially, the curing degree can be adjusted by the irradiation amount of the active energy ray.

The laminate of the present invention may further include a second substrate on the substrate and the cured layer. The material of the second substrate is not limited particularly, and examples thereof include woods, metals, metal oxides, plastics, paper, silicon or modified silicon, and a substrate obtained by joining different raw materials together also may be used. The shape of the substrate is not limited particularly and may be an arbitrary shape according to the purpose, for example, tabular shape, sheet-like shape, or those having curvature on the whole surface or a part of the three-dimensional shape. The hardness, the thickness and the like of the substrate are not limited particularly as well.

The laminate of the present invention can be preferably used as an interlayer material between different materials, since the cured layer has high adhesion to not only plastics but also inorganic materials. In this case, the case where the substrate is a plastic and the second substrate is an inorganic layer is particularly preferred.
As the inorganic layer, for example, quartz, sapphire, glass, an optical film, ceramic material, an inorganic oxide, deposited film (CVD, PVD, sputtering), a magnetic film, a reflection film, metals such as Ni, Cu, Cr, Fe and stainless steel, paper, SOG (Spin On Glass), SOC (Spin On Carbon), a plastic layer such as polyester, polycarbonate, or polyimide, a TFT array substrate, a PDP electrode plate, a conductive substrate such as ITO or metal, an insulating substrate, and a silicon substrate such as silicon, silicon nitride, polysilicon, silicon oxide, or amorphous silicon.

The cured layer of the present invention, which is obtained by curing the active energy ray curable composition, also has excellent processability, and therefore, can be subjected to a bending processing along with the substrate. For example, the composition is directly applied on a plate-shaped substrate to obtain a substrate subjected to the application, the coating film is irradiated with an active energy ray to thereby obtain a substrate with a cured film (namely, a laminate), and then a bending processing can be performed. Thus, there is no attention necessary for applying the composition onto a bending substrate, the productivity of the bending processing materials is remarkably improved. The molded article of the present invention is so excellent in not only flexibility under heating, but also hard coat property after hot bending processing.

In the case where bending processing is required, the thickness of the coating film formed by applying the composition of the present invention is preferably 0.5 to 40 µm, more preferably 3 to 35 µm, further preferably 5 to 30 µm, particularly preferably 10 to 25 µm. In the case where the thickness is not less than the lower limit, the abrasion resistance and the weather resistance are exhibited sufficiently, and in case where the thickness is not more than the upper limit, the good flexibility is exhibited.

The method of bending processing is not limited particularly, and, besides bending processing which directly bends the laminate, there are processing methods such as a press molding, a free blow molding, a vacuum molding, a pressure forming, and a twin composite molding.

The hot bending is performed preferably at 80°C or more, more preferably 150°C or more. Further, the upper limit of the temperature can be determined appropriately, as long as it is less than the melting temperature of the substrate.

The laminate of the present invention is excellent in weather resistance, abrasion resistance, chemical resistance, adhesion and outer appearance, and therefore, can be used particularly preferably as various protective materials. For example, it can be used for building materials, housing equipment, transportation equipment such as automobiles, ships, aircraft, and railways, electronic materials, recording materials, optical materials, lighting, packaging materials, protection of outdoor installations, optical fiber coating, and resin glass protection, and is particularly suitable for use in automobile headlamp lenses, automobile glazing, automobile body exteriors, plastic building materials, and steel plate building materials.

### EXAMPLES

In the following, the present invention is described in more details referring to Examples and Comparative Examples, and however, the present invention is not limited to the following embodiments. Further, in the working examples, "part" and "%" are based on a mass basis, unless otherwise indicated.

### (Synthetic Example 1: Synthesis of UA-1)

In a 1-L flask equipped with a stirrer, a gas-introducing tube, a condenser and a thermometer, "Basonat (registered trademark) HA 3000" manufactured by BASF (NCO equivalent 19.5% by mass, 213.39 parts by mass), 2,6-di-tert-butyl-4-methylphenol (0.91 parts by mass), methoxy hydroquinone (0.09 parts by mass), and dibutyl tin diacetate (0.09 parts by mass) were added, the temperature was raised to 70°C, and 2-hydroxyethyl acrylate (116.1 parts by mass) was dividedly charged therein over 1 hour. After the charge, the reaction was performed at 80°C until the infrared absorption spectrum at 2250 cm⁻¹, which indicates an isocyanate group, disappeared, thereby obtaining a urethane (meth)acrylate compound UA-1 having an allophanate bond.

### (Synthetic Example 2: Synthesis of UA-2)

In a 1-L flask equipped with a stirrer, a gas-introducing tube, a condenser and a thermometer, "Basonat (registered trademark) HA 3000" manufactured by BASF (NCO equivalent 19.5% by mass, 213.39 parts by mass), 2,6-di-tert-butyl-4-methylphenol (0.72 parts by mass), methoxy hydroquinone (0.07 parts by mass), and dibutyl tin diacetate (0.07 parts by mass) were added, the temperature was raised to 70°C, and 4-hydroxybutyl acrylate (144.2 parts by mass) was dividedly charged therein over 1 hour. After the charge, the reaction was performed at 80°C until the infrared absorption spectrum at 2250 cm⁻¹, which indicates an isocyanate group, disappeared, thereby obtaining a urethane (meth)acrylate compound UA-2 having an allophanate bond.

### (Synthetic Example 3: Synthesis of UA-3)

In a 1-L flask equipped with a stirrer, a gas-introducing tube, a condenser and a thermometer, "Basonat (registered trademark) HA 3000" manufactured by BASF (NCO equivalent 19.5% by mass, 213.39 parts by mass), 2,6-di-tert-butyl-4-methylphenol (0.91 parts by mass), methoxy hydroquinone (0.09 parts by mass), and dibutyl tin diacetate (0.09 parts by mass) were added, the temperature was raised to 70°C, and 2-hydroxyethyl acrylate (77.4 parts by mass) and "PLACCEL-210" manufactured by Daicel Corporation (hydroxy value: 113.4, 164.90 parts by mass) were dividedly charged therein over 1 hour. After the charge, the reaction was performed at 80°C until the infrared absorption spectrum at 2250 cm⁻¹, which indicates an isocyanate group, disappeared, thereby obtaining a urethane (meth)acrylate compound UA-3 having an allophanate bond.

### (Synthetic Example 4: Synthesis of UA-4)

In a 1-L flask equipped with a stirrer, a gas-introducing tube, a condenser and a thermometer, "Basonat (registered trademark) HA 3000" manufactured by BASF (NCO equivalent 19.5% by mass, 213.39 parts by mass), 2,6-di-tert-butyl-4-methylphenol (1.12 parts by mass), methoxy hydroquinone (0.11 parts by mass), and dibutyl tin diacetate (0.11 parts by mass) were added, the temperature was raised to 70°C, and "PLACCEL-FA-2D" manufactured by Daicel Corporation (344.0 parts by mass) was dividedly charged therein over 1 hour. After the charge, the reaction was performed at 80°C until the infrared absorption spectrum at 2250 cm⁻¹, which indicates an isocyanate group, disappeared, thereby obtaining a urethane (meth)acrylate compound UA-4 having an allophanate bond.

### (Synthetic Example 5: Synthesis of UA-5)

In a 1-L flask equipped with a stirrer, a gas-introducing tube, a condenser and a thermometer, "Burnock (registered trademark) DN-902S" manufactured by DIC Corporation (NCO equivalent 23.5% by mass, 178.72 parts by mass), 2,6-di-tert-butyl-4-methylphenol (0.84 parts by mass), methoxy hydroquinone (0.084 parts by mass), and dibutyl tin diacetate (0.084 parts by mass) were added, the temperature was raised to 70°C, and 2-hydroxyethyl acrylate (116.1 parts by mass) were dividedly charged therein over 1 hour. After the charge, the reaction was performed at 80°C until the infrared absorption spectrum at 2250 cm⁻¹, which indicates an isocyanate group, disappeared, thereby obtaining a urethane (meth)acrylate compound UA-5 having an isocyanurate bond.

### (Synthetic Example 6: Synthesis of UA-6)

In a 1-L flask equipped with a stirrer, a gas-introducing tube, a condenser and a thermometer, "Burnock (registered trademark) DN-902S" manufactured by DIC Corporation (NCO equivalent 23.5% by mass, 178.72 parts by mass), 2,6-di-tert-butyl-4-methylphenol (0.65 parts by mass), methoxy hydroquinone (0.07 parts by mass), and dibutyl tin diacetate (0.07 parts by mass) were added, the temperature was raised to 70°C, and 4-hydroxybutyl acrylate (144.2 parts by mass) was dividedly charged therein over 1 hour. After the charge, the reaction was performed at 80°C until the infrared absorption spectrum at 2250 cm⁻¹, which indicates an isocyanate group, disappeared, thereby obtaining a urethane (meth)acrylate compound UA-6 having an isocyanurate bond.

### (Synthetic Example 7: Synthesis of UA-7)

In a 1-L flask equipped with a stirrer, a gas-introducing tube, a condenser and a thermometer, "Burnock (registered trademark) DN-902S" manufactured by DIC Corporation (NCO equivalent 23.5% by mass, 178.72 parts by mass), 2,6-di-tert-butyl-4-methylphenol (0.84 parts by mass), methoxy hydroquinone (0.084 parts by mass), and dibutyl tin diacetate (0.084 parts by mass) were added, the temperature was raised to 70°C, and 2-hydroxyethyl acrylate (77.4 parts by mass) and "PLACCEL-210" manufactured by Daicel Corporation (hydroxy value: 113.4, 164.90 parts by mass) were dividedly charged therein over 1 hour. After the charge, the reaction was performed at 80°C until the infrared absorption spectrum at 2250 cm⁻¹, which indicates an isocyanate group, disappeared, thereby obtaining a urethane (meth)acrylate compound UA-7 having an isocyanurate bond.

### (Synthetic Example 8: Synthesis of UA-8)

In a 1-L flask equipped with a stirrer, a gas-introducing tube, a condenser and a thermometer, "Burnock (registered trademark) DN-902S" manufactured by DIC Corporation (NCO equivalent 23.5% by mass, 178.72 parts by mass), 2,6-di-tert-butyl-4-methylphenol (1.05 parts by mass), methoxy hydroquinone (0.11 parts by mass), and dibutyl tin diacetate (0.11 parts by mass) were added, the temperature was raised to 70°C, and "PLACCEL FA-2D" (344.0 parts by mass) was dividedly charged therein over 1 hour. After the charge, the reaction was performed at 80°C until the infrared absorption spectrum at 2250 cm⁻¹, which indicates an isocyanate group, disappeared, thereby obtaining a urethane (meth)acrylate compound UA-8 having an isocyanurate bond.

### (Synthetic Example 9: Synthesis of UA-9)

In a 1-L flask equipped with a stirrer, a gas-introducing tube, a condenser and a thermometer, "Desmodur I" manufactured by Sumika Covestro Urethane Co., Ltd. (NCO equivalent 37.8% by mass, 111.15 parts by mass), 2,6-di-tert-butyl-4-methylphenol (0.84 parts by mass), methoxy hydroquinone (0.084 parts by mass), and dibutyl tin diacetate (0.084 parts by mass) were added, the temperature was raised to 70°C, and 2-hydroxyethyl acrylate (116.1 parts by mass) was dividedly charged therein over 1 hour. After the charge, the reaction was performed at 80°C until the infrared absorption spectrum at 2250 cm⁻¹, which indicates an isocyanate group, disappeared, thereby obtaining a urethane (meth)acrylate compound UA-9 having an isocyanurate bond.

### (Synthetic Example 10: Synthesis of UA-10)

In a 1-L flask equipped with a stirrer, a gas-introducing tube, a condenser and a thermometer, "Desmodur I" manufactured by Sumika Covestro Urethane Co., Ltd. (NCO equivalent 37.8% by mass, 111.15 parts by mass), 2,6-di-tert-butyl-4-methylphenol (0.84 parts by mass), methoxy hydroquinone (0.084 parts by mass), and dibutyl tin diacetate (0.084 parts by mass) were added, the temperature was raised to 70°C, and 2-hydroxyethyl acrylate (116.1 parts by mass) and "PLACCEL-210" manufactured by Daicel Corporation (hydroxy value: 113.4, 247.35 parts by mass) were dividedly charged therein over 1 hour. After the charge, the reaction was performed at 80°C until the infrared absorption spectrum at 2250 cm⁻¹, which indicates an isocyanate group, disappeared, thereby obtaining a urethane (meth)acrylate compound UA-10 having an isocyanurate bond.

### (Synthetic Example 11: Synthesis of UA-11)

In a 1-L flask equipped with a stirrer, a gas-introducing tube, a condenser and a thermometer, "Desmodur H" manufactured by Sumika Covestro Urethane Co., Ltd. (84.10 parts by mass), 2,6-di-tert-butyl-4-methylphenol (1.39 parts by mass), methoxy hydroquinone (0.14 parts by mass), and dibutyl tin diacetate (0.14 parts by mass) were added, the temperature was raised to 70°C, and "Aronix M-403 (hydroxy value 92)" (609.78 parts by mass) was dividedly charged therein over 1 hour. After the charge, the reaction was performed at 80°C until the infrared absorption spectrum at 2250 cm⁻¹, which indicates an isocyanate group, disappeared, thereby obtaining a four-functional or more (meth)acrylate compound UA-11.

### (Synthetic Example 12: Synthesis of UA-12)

In a 1-L flask equipped with a stirrer, a gas-introducing tube, a condenser and a thermometer, "Burnock DN-902S" manufactured by DIC Corporation (178.72 parts by mass), 2,6-di-tert-butyl-4-methylphenol (1.01 parts by mass), methoxy hydroquinone (0.10 parts by mass), and dibutyl tin diacetate (0.10 parts by mass) were added, the temperature was raised to 70°C, and "Aronix M-306 (hydroxy value 157.2)" (356.87 parts by mass) was dividedly charged therein over 1 hour. After the charge, the reaction was performed at 80°C until the infrared absorption spectrum at 2250 cm⁻¹, which indicates an isocyanate group, disappeared, thereby obtaining a four-functional or more (meth)acrylate compound UA-12.

### (Example 1)

An active energy ray curable composition of Example 1 was prepared by uniformly mixing 10 parts by mass of 1,4-butanediol diacrylate as component (A), 10 parts by mass of UA-1 as component (B2), 80 parts by mass of tris-(2-acryloxyethyl) isocyanurate as component (C), 1.5 parts by mass of Omunirad 754 (manufactured by IGM) and 1.5 parts by mass of Omunirad 819 (manufactured by IGM) as the photopolymerization initiator, 0.25 parts by mass of TINUVIN 123 (manufactured by BASF) as the HALS, and 4 parts by mass of RUVA-93 (manufactured by Otsuka Chemical Co., Ltd.) as the ultraviolet absorber in a mixed organic solvent of propylene glycol monomethyl ether/butyl acetate (=50/50% by mass) to provide a solid content of 70% by mass.

### (Examples 2 to 44 and Comparative Examples 1 to 5)

The respective active energy ray curable compositions were obtained in the same manner as in Example 1 except for changing the compositions and the solid content ratios as indicated in Tables 1 to 6. While the description regarding the photopolymerization initiator and the organic solvent is omitted in the tables, those used in Example 1 were used in the same manner as in Example 1 in all the examples and comparative examples shown in the tables.

### <Preparation of Samples for Evaluation>

Laminates having a cured film having a thickness of 20 µm each was obtained by applying the active energy ray curable composition of each example on the substrate as described in Tables 1 to 6 by means of a bar coater, drying the resultant at 80°C for 4 minutes, and then irradiating the composition at an illuminance of 200 mW/cm² and an irradiation light quality of 1000 mJ/cm² by means of an ultraviolet irradiation device (a high pressure mercury lamp, manufactured by GS-YUASA) in the atmosphere.

### [Outer Appearance Evaluation]

The samples for evaluation after curing were observed visually, and were evaluated according to the following criteria, and evaluation of B or more is rated as "acceptable". The results are described as "Outer Appearance" in Tables 1 to 6.
A: No defect in outer appearance
B: Unevenness of the substrate or scratch on the substrate at the time of application slightly affects the outer appearance.
C: Partially whitened
D: Wholly whitened

### [Chemical Resistance Evaluation]

With respect to each sample for evaluation, a spot test was performed according to a drop method using a 40% by mass aqueous solution of sulfuric acid according to JIS K 5600-6.

The maximum time at which any outer appearance defect was not recognized was regarded as an evaluation result. The case where it was 15 minutes or more was rated as "acceptable", and in the case where the generation of outer appearance defect was not recognized over 50 minutes, after which the test was finished, the case was regarded as "50". The time of the result (unit: minute) is described as "Chemical Resistance" in Tables 1 to 6.

### [Weather Resistance Evaluation A]

With respect to each sample for evaluation, an accelerated weathering test (SUV test) was performed under the following conditions.

Condition: Irradiation (63°C, 90% RH, 100mW/cm², 4 hours) → Darkness (70°C, 90% RH, 4 hours) → Dew Condensation (30°C, 98% RH, 4 hours) were repeated, and a shower was conducted before and after the irradiation.

Every one cycle (96 hours), the outer appearance was observed visually, and the maximum cycle number at which generation of crack in the cured film was not recognized was regarded as an evaluation result. The case where it was 3 cycles (288 hours) or more was rated as "acceptable." In the case where the generation of crack was not recognized over 15 cycles, the case was regarded as "15". The maximum cycle number of each sample is described as "Weather Resistance A" in Tables 1 to 6.

### [Weather Resistance Evaluation B]

A SUV test was performed under the same conditions as in Weather Resistance Evaluation A described above, and every 96 hours, the surface of each sample was subjected to a cellophane tape adhesion test.

In the cellophane tape adhesion test, the surface state after a peeling test was observed visually, the number of cycles subjected at the time which peeling was recognized was an evaluation result, the case where it was three cycles (288 hours) or more was rated as "acceptable." In the case where peeling was not recognized even after 15 cycles, the case was regarded as "15". The maximum cycle number of each sample is described as "Weather Resistance B" in Tables 1 to 6.

**[Table 1]**

| | Examples | | | | | | | | |
|---|---|---|---|---|---|---|---|---|---|
| | 1 | 2 | 3 | 4 | 5 | 6 | 7 | 8 | 9 |
| 1,4-BDA | 10 | 60 | 10 | 15 | 55 | 15 | 20 | 30 | 40 |
| UA-1 | 10 | 39 | 80 | 15 | 42 | 70 | 25 | 50 | 40 |
| A9300 | 80 | 1 | 10 | 70 | 3 | 15 | 55 | 20 | 20 |
| TINUVIN 123 | 0.25 | 0.25 | 0.25 | 0.25 | 0.25 | 0.25 | 0.25 | 0.25 | 0.25 |
| RUVA-93 | 4 | 4 | 4 | 4 | 4 | 4 | 4 | 4 | 4 |
| Solid Content | 70 | 100 | 70 | 80 | 100 | 80 | 90 | 95 | 100 |
| Substrate | PE | PE | PE | PE | PE | PE | PE | PE | PE |
| Outer Appearance | A | B | A | A | A | A | A | A | A |
| Chemical Resistance | 25 | 20 | 15 | 25 | 20 | 15 | 25 | 20 | 25 |
| Weather Resistance A | 4 | 3 | 7 | 4 | 4 | 7 | 5 | 5 | 5 |
| Weather Resistance B | 4 | 7 | 4 | 5 | 7 | 5 | 7 | 7 | 7 |

**[Table 2]**

| | Examples | | | | | | | | | |
|---|---|---|---|---|---|---|---|---|---|---|
| | 10 | 11 | 12 | 13 | 14 | 15 | 16 | 17 | 18 | 19 |
| 1,4-BDA | 50 | 20 | | | | | | | | |
| 1,6-HDA | | | 40 | | | | | | | |
| 1,9-NDA | | | | 40 | | 40 | 40 | 40 | 40 | 40 |
| 1,10-DDA | | | | | 40 | | | | | |
| UA-1 | 45 | 60 | 40 | 40 | 40 | 38 | 36 | 34 | 30 | |
| UA-2 | | | | | | | | | | 30 |
| UA-3 | | | | | | 2 | 4 | 6 | 10 | 10 |
| A9300 | 5 | 20 | 20 | 20 | 20 | 20 | 20 | 20 | 20 | 20 |
| TINUVIN 123 | 0.25 | 0.25 | 0.25 | 0.25 | 0.25 | 0.25 | 0.25 | 0.25 | 0.25 | 0.25 |
| RUVA-93 | 4 | 4 | 4 | 4 | 4 | 4 | 4 | 4 | 4 | 4 |
| Solid Content | 100 | 90 | 100 | 100 | 100 | 100 | 100 | 100 | 100 | 100 |
| Substrate | PE | PE | PE | PE | PE | PE | PE | PE | PE | PE |
| Outer Appearance | A | A | A | A | A | A | A | A | A | A |
| Chemical Resistance | 20 | 15 | 25 | 25 | 25 | 25 | 25 | 25 | 25 | 25 |
| Weather Resistance A | 5 | 7 | 7 | 7 | 7 | 8 | 9 | 10 | 10 | 10 |
| Weather Resistance B | 7 | 6 | 8 | 8 | 8 | 9 | 9 | 9 | 9 | 9 |

**[Table 3]**

| | Examples | | | | | | | | |
|---|---|---|---|---|---|---|---|---|---|
| | 20 | 21 | 22 | 23 | 24 | 25 | 26 | 27 | 28 |
| 1,9-NDA | 40 | 40 | 40 | 40 | 40 | 40 | 40 | 40 | 40 |
| UA-1 | 30 | 10 | 6 | 4 | 2 | 30 | | | |
| UA-3 | 10 | 30 | 34 | 36 | 38 | | | | |
| UA-4 | | | | | | 10 | 10 | | |
| UA-5 | | | | | | | 30 | 30 | 30 |
| UA-7 | | | | | | | | 10 | |
| UA-8 | | | | | | | | | 10 |
| A9300 | | 20 | 20 | 20 | 20 | 20 | 20 | 20 | 20 |
| A9300-CL | 20 | | | | | | | | |
| TINUVIN 123 | 0.25 | 0.25 | 0.25 | 0.25 | 0.25 | 0.25 | 0.25 | 0.25 | 0.25 |
| RUVA-93 | 4 | 4 | 4 | 4 | 4 | 4 | 4 | 4 | 4 |
| Solid Content | 100 | 100 | 100 | 100 | 100 | 100 | 100 | 100 | 100 |
| Substrate | PE | PE | PE | PE | PE | PE | PE | PE | PE |
| Outer Appearance | A | A | A | A | A | A | A | A | A |
| Chemical Resistance | 25 | 25 | 25 | 20 | 20 | 25 | 30 | 35 | 35 |
| Weather Resistance A | 10 | 10 | 10 | 9 | 8 | 11 | 12 | 13 | 15 |
| Weather Resistance B | 9 | 9 | 9 | 9 | 9 | 10 | 10 | 11 | 13 |

**[Table 4]**

| | Examples | | | | | | | |
|---|---|---|---|---|---|---|---|---|
| | 29 | 30 | 31 | 32 | 33 | 34 | 35 | 36 |
| 1,9-NDA | 40 | 40 | 40 | 40 | 40 | 40 | 40 | 40 |
| UA-6 | 30 | 29.3 | 27.8 | 26.3 | 23.3 | 22.5 | 18.8 | 18.8 |
| UA-8 | 10 | 9.8 | 9.3 | 8.8 | 7.8 | 7.5 | 6.3 | 6.3 |
| A9300 | 20 | 20 | 20 | 20 | 20 | 20 | 20 | 15 |
| DPHA | | 1 | 3 | 5 | 9 | 10 | 15 | 20 |
| TINUVIN 123 | 0.25 | 0.25 | 0.25 | 0.25 | 0.25 | 0.25 | 0.25 | 0.25 |
| RUVA-93 | 4 | 4 | 4 | 4 | 4 | 4 | 4 | 4 |
| Solid Content | 100 | 100 | 100 | 100 | 100 | 100 | 100 | 100 |
| Substrate | PE | PE | PE | PE | PE | PE | PE | PE |
| Outer Appearance | A | A | A | A | A | A | A | A |
| Chemical Resistance | 35 | 40 | 45 | 50 | 50 | 50 | 50 | 50 |
| Weather Resistance A | 15 | 15 | 15 | 15 | 15 | 15 | 14 | 13 |
| Weather Resistance B | 13 | 13 | 13 | 13 | 13 | 13 | 13 | 13 |

**[Table 5]**

| | Examples | | | | | | | |
|---|---|---|---|---|---|---|---|---|
| | 37 | 38 | 39 | 40 | 41 | 42 | 43 | 44 |
| 1,9-NDA | 40 | 40 | 40 | 40 | 40 | 40 | 40 | 40 |
| UA-6 | 23.3 | 23.3 | 23.3 | 23.3 | 23.3 | 23.3 | 23.3 | 23.3 |
| UA-8 | 7.8 | 7.8 | 7.8 | 7.8 | 7.8 | 7.8 | 7.8 | 7.8 |
| A9300 | 20 | 20 | 20 | 20 | 20 | 20 | 20 | 20 |
| DPHA | | | | | 9 | 9 | 9 | 9 |
| DPCA-20 | 9 | | | | | | | |
| DPCA-60 | | 9 | | | | | | |
| UA-11 | | | 9 | | | | | |
| UA-12 | | | | 9 | | | | |
| TINUVIN 123 | 0.25 | 0.25 | 0.25 | 0.25 | 0.25 | 0.25 | | |
| TINUVIN 152 | | | | | | | 0.25 | |
| LA-82 | | | | | | | | 0.25 |
| LA-46 | | | | | 2 | 3 | | |
| TINUVIN 479 | | | | | | 1 | | |
| RUVA-93 | 4 | 4 | 4 | 4 | 4 | | 4 | 4 |
| Solid Content | 100 | 100 | 100 | 100 | 100 | 100 | 100 | 100 |
| Substrate | PE | PE | PE | PE | PC | ABS | AU | EP |
| Outer Appearance | A | A | A | A | A | A | A | A |
| Chemical Resistance | 50 | 50 | 50 | 50 | 50 | 50 | 50 | 50 |
| Weather Resistance A | 15 | 15 | 15 | 15 | 15 | 15 | 15 | 15 |
| Weather Resistance B | 13 | 13 | 13 | 13 | 13 | 13 | 13 | 13 |

**[Table 6]**

| | Comparative Examples | | | | |
|---|---|---|---|---|---|
| | 1 | 2 | 3 | 4 | 5 |
| 1,4-BDA | | | | 60 | 60 |
| DPGDA | 60 | | | | |
| A-200 | | 60 | | | |
| A-DCP | | | 60 | | |
| UA-1 | 39 | 39 | 39 | | |
| UA-9 | | | | | 39 |
| UA-10 | | | | 39 | |
| A9300 | 1 | 1 | 1 | | |
| TEMPTA | | | | 1 | 1 |
| TINUVIN 123 | 0.25 | 0.25 | 0.25 | 0.25 | 0.25 |
| RUVA-93 | 4 | 4 | 4 | 4 | 4 |
| Solid Content | 100 | 100 | 100 | 100 | 100 |
| Substrate | PE | PE | PE | PE | PE |
| Outer Appearance | D | D | B | D | D |
| Chemical Resistance | 10 | 10 | 10 | 5 | 5 |
| Weather Resistance A | 2 | 2 | 2 | 1 | 1 |
| Weather Resistance B | 5 | 5 | 1 | 5 | 5 |

The abbreviations in Tables 1 to 6 indicate the following compounds or the compounds obtained in the above-described synthetic examples.
1,4-BDA: 1,4-butanediol diacrylate
1,6-HDA: 1,6-hexanediol diacrylate
1,9-NDA: 1,9-nonanediol diacrylate
1,10-DDA: 1,10-decanediol diacrylate
DPGDA: dipropylene glycol diacrylate (manufactured by DAICEL-ALLNEX LTD.)
A-200: polyethylene glycol diacrylate (manufactured by Shin-Nakamura Chemical Co., Ltd.)
A-DCP: tricyclodecanedimethanol (manufactured by Shin-Nakamura Chemical Co., Ltd.)
A9300: tris(2-acryloxyethyl) isocyanurate (manufactured by Shin-Nakamura Chemical Co., Ltd.)
A9300-CL: caprolactone-modified tris(2-acryloxyethyl) isocyanurate (manufactured by Shin-Nakamura Chemical Co., Ltd.)
TEMPTA: trimethylolpropane triacrylate (manufactured by DAICEL-ALLNEX LTD.)
DPHA: dipentaerythritol hexaacrylate (KAYARAD DPHA manufactured by Nippon Kayaku Co., Ltd.)
DPCA-20: caprolactone-modified dipentaerythritol hexaacrylate (KAYARAD DPCA-20 manufactured by Nippon Kayaku Co., Ltd.)
DPCA-60: caprolactone-modified dipentaerythritol hexaacrylate (KAYARAD DPCA-60 manufactured by Nippon Kayaku Co., Ltd.)
TINUVIN 123: HALS "TINUVIN 123" (trade name, manufactured by BASF)
TINUVIN 152: HALS "TINUVIN 152" (trade name, manufactured by BASF)
LA-82: HALS "ADK STAB LA-82" (trade name, manufactured by ADEKA Corporation)
LA-46: an ultraviolet absorbent "ADK STAB LA-46" (trade name, manufactured by ADEKA Corporation)
TINUVIN 479: an ultraviolet absorbent "TINUVIN 479" (trade name, manufactured by BASF)
RUVA-93: an ultraviolet absorbent "RUVA-93" (trade name, manufactured by Otsuka Chemical Co., Ltd.)
PE: a polyester resin-coated steel panel (a substrate formed by applying a white polyester/isocyanate coating material having a pigment mass concentration (PWC) of 60%) on the surface of a galvanized steel sheet having a thickness of 2 mm so as to provide a dry film thickness of 30 to 40 µm, and heat curing the coating material at 80°C for 30 minutes, the substrate thickness 2 mm)
PC: a polycarbonate resin substrate (Panlite L-1225ZL, manufactured by Teijin Limited, thickness 3 mm)
ABS: ABS resin substrate (Kralastic GA-701 JH22, manufactured by Nippon A&L Inc., thickness 3 mm)
AU: an acrylic urethane resin-coated steel plate (a substrate formed by applying a white acrylic urethane coating material having a PWC of 60% on the surface of a galvanized steel sheet having a thickness of 2 mm so as to provide a dry film thickness of 30 to 40 µm, and heat curing the coating material at 80°C for 30 minutes, the substrate thickness 2 mm)
EP: an epoxy resin-coated steel plate (a substrate formed by applying an acid-epoxy cured coating material having a PWC of 60% on the surface of a galvanized steel sheet having a thickness of 2 mm so as to provide a dry film thickness of 30 to 40 µm, and heat curing the coating material at 80°C for 30 minutes, the substrate thickness 2 mm)

It could be found from the results of Examples 1 to 44 that the cured films formed from the active energy ray curable compositions of the present invention were excellent in outer appearance, chemical resistance, weather resistance, and adhesion. On the other hand, it could be found that the compositions of Comparative Examples 1 to 5 not containing any one of the components were poor in at least one of the properties.

### (Example 45)

A laminate having a film having a thickness of 10 µm was obtained by applying the active energy ray curable composition of Example 2 on the same polyester resin-coated steel panel described above (substrate) by means of a bar coater, drying the resultant at 80°C for 4 minutes, and irradiating the composition at an illuminance of 200 mW/cm² and an irradiation light quality 1 as indicated in Table 7 (unit: mJ/cm²) by means of an ultraviolet irradiation device (a high pressure mercury lamp, manufactured by GS-YUASA) in the atmosphere.

Then, a laminate having a cured film having a thickness of 20 µm was obtained by applying the same active energy ray curable composition on the obtained film by means of a bar coater, drying the resultant at 80°C for 4 minutes, and irradiating the composition at an illuminance of 200 mW/cm² and an irradiation light quality 2 as indicated in Table 7 (unit: mJ/cm²) by means of the same ultraviolet irradiation device in the atmosphere.

### (Examples 46 to 50, and Comparative Examples 6 to 9)

The respective laminates were obtained in the same manner as in Example 45 except for using the active energy ray curable compositions of Examples and Comparative Examples as indicated in Tables 7 and 8 and changing the irradiation light qualities 1 and 2 as indicated in Tables 7 and 8.

The obtained laminates of the respective examples were used as the evaluation samples, and the outer appearance evaluation, the chemical resistance evaluation, and the weather evaluations A and B were performed in the same manner as in Example 1 and the like. The results are shown in Tables 7 and 8. Please note that the result of Weather Resistance Evaluation B of Comparative Example 8 was rated as "0", as peeling was recognized before the beginning of the test.

**[Table 7]**

| | Examples | | | | | |
|---|---|---|---|---|---|---|
| | 45 | 46 | 47 | 48 | 49 | 50 |
| Composition Used Example No. | Example 2 | Example 9 | Example 13 | Example 13 | Example 29 | Example 34 |
| Irradiation Light Quantity 1 | 1000 | 1000 | 1000 | 100 | 1000 | 1000 |
| Irradiation Light Quantity 2 | 1000 | 1000 | 1000 | 2000 | 1000 | 1000 |
| Outer Appearance | B | A | A | A | A | A |
| Chemical Resistance | 20 | 25 | 25 | 25 | 35 | 50 |
| Weather Resistance A | 3 | 5 | 7 | 7 | 15 | 15 |
| Weather Resistance B | 7 | 7 | 8 | 8 | 13 | 13 |

**[Table 8]**

| | Comparative Examples | | | |
|---|---|---|---|---|
| | 6 | 7 | 8 | 9 |
| Composition Used Example No. | Comparative Example 1 | Comparative Example 3 | Comparative Example 4 | Comparative Example 5 |
| Irradiation Light Quantity 1 | 1000 | 1000 | 1000 | 1000 |
| Irradiation Light Quantity 2 | 1000 | 1000 | 1000 | 1000 |
| Outer Appearance | D | B | D | D |
| Chemical Resistance | 10 | 10 | 5 | 5 |
| Weather Resistance A | 2 | 2 | 1 | 1 |
| Weather Resistance B | 2 | 0 | 5 | 5 |

It could be found from the results of Examples 45 to 50 that the cured films formed from the active energy ray curable compositions of the present invention were excellent in outer appearance, chemical resistance, weather resistance, and adhesion. On the other hand, it could be found that the compositions of Comparative Examples 6 to 9 were poor in at least either of the properties.

## Claims

1. An active energy ray curable composition comprising a compound (A) having a chain hydrocarbon group having 2 to 12 carbon atoms and two (meth)acryloyloxy groups, and a compound having an isocyanurate bond or an allophanate bond.

2. The active energy ray curable composition according to claim 1, wherein the compound having an isocyanurate bond or an allophanate bond is a urethane (meth)acrylate compound (B) having an isocyanurate bond or an allophanate bond.

3. The active energy ray curable composition according to claim 2, further comprising a (meth)acrylate compound (C) having an isocyanurate bond.

4. The active energy ray curable composition according to claim 2, wherein the urethane (meth)acrylate compound (B) having an isocyanurate bond or an allophanate bond comprises a compound (B 1) including -O-C(=O)-(CH₂)_{nA} (where nA represents an integer of 1 to 6) in the structure, separately from an isocyanurate bond, an allophanate bond and a (meth)acryloyl group, and a compound (B2) not including -O-C(=O)-(CH₂)_{nA} (where nA represents an integer of 1 to 6) in the structure, separately from an isocyanurate bond, an allophanate bond and a (meth)acryloyl group.

5. The active energy ray curable composition according to claim 1, further comprising a compound (D) having four or more of (meth)acryloyl groups per one molecule thereof.

6. The active energy ray curable composition according to claim 1, which comprises no solvent or a solvent in an amount of 30% by mass or less of the whole amount of the composition.

7. A laminate comprising a cured layer formed from the active energy ray curable composition according to any one of claims 1 to 6.

8. A method of producing a laminate, comprising a step 1 of applying the active energy ray curable composition according to any one of claims 1 to 6 on a substrate to form a coating film and a step 2 of irradiating the coating film with an active energy ray to cure part or whole of the coating film.

9. The method of producing a laminate according to claim 8, comprising, subsequently to the step 2, repeating the step 1 and the step 2 in this order at least one time.
